# EUROPEAN PATENT SPECIFICATION

(11) **EP 4 485 292 B1**
(45) Date of publication and mention of the grant of the patent: **09.09.2026**
(21) Application number: 24184858.9
(22) Date of filing: 27.06.2024
(51) Int. Cl.: G06N 10/20, G06N 10/60, G06N 5/01, G06Q 10/04, G06Q 40/06, G06Q 50/06, G06Q 50/40, G06Q 90/00

(54) **METHOD AND SYSTEM FOR SOLVING PROBLEMS WITH MULTIPLE CONFLICTING OBJECTIVES**
VERFAHREN UND SYSTEM ZUR LÖSUNG VON PROBLEMEN MIT MEHREREN MITEINANDER IM KONFLIKT STEHENDEN ZIELEN
PROCÉDÉ ET SYSTÈME DE RÉSOLUTION DE PROBLÈMES ASSOCIÉS À DE MULTIPLES OBJECTIFS CONFLICTS

(30) Priority: 27.06.2023 EP 23181719
(43) Date of publication of application: 01.01.2025
(73) Proprietor: Honda Research Institute Europe GmbH, 63073 Offenbach/Main (DE)
(72) Inventor: Schmitt, Sebastian, 63073 Offenbach/Main (DE); Ekstrøm, Linus, 63073 Offenbach/Main (DE)
(74) Representative: Beder, Jens

(56) References cited:
- URGELLES HELEN ET AL: "Multi-Objective Routing Optimization for 6G Communication Networks Using a Quantum Approximate Optimization Algorithm", SENSORS, 6 October 2022 (2022-10-06), pages 7570, XP093106194, Retrieved from the Internet <URL:https://www.ncbi.nlm.nih.gov/pmc/articles/PMC9570750/pdf/sensors-22-07570.pdf> [retrieved on 20231127], DOI: 10.3390/s22197570
- PABLO D\'IEZ-VALLE ET AL: "Multiobjective variational quantum optimization for constrained problems: an application to Cash Management", ARXIV.ORG, CORNELL UNIVERSITY LIBRARY, 201 OLIN LIBRARY CORNELL UNIVERSITY ITHACA, NY 14853, 8 February 2023 (2023-02-08), XP091432512
- PELÁEZ EMILIO: "Quantum state tomography", 14 January 2021 (2021-01-14), pages 1 - 16, XP093106197, Retrieved from the Internet <URL:https://medium.com/quantum-untangled/quantum-state-tomography-4163d1df5a4d> [retrieved on 20231128]

## Description

The invention relates to a computer implemented method for obtaining a set of Pareto-optimal solutions to a given multi-objective optimization problem and a hybrid quantum-classical computer system implementing such method.

Quantum optimization is a very active field of research. The current generation of quantum computing hardware devices is still limited in sizes and subject to noise. The usefulness of these so-called noisy intermedia scale quantum (NISQ) devices for application problems is currently being tested and evaluated on many real-world application problems.

The current state of the art approaches for solving optimization problems with quantum computers are hybrid quantum-classical algorithms as described for example in "Noisy intermediate-scale quantum (NISQ) algorithms, Rev. Mod. Phys. 94, 015004". Examples are variational quantum eigensolver (VQE) described in "The variational quantum eigensolver: a review of methods and best practices. Physics Reports, 986, 1-128", quantum approximate optimization algorithm (QAOA) described in "A Quantum Approximate Optimization Algorithm, arXiv:1411.4028 (2014)" or "From the quantum approximate optimization algorithm to a quantum alternating operator ansatz, Algorithms 12 (2019)" or the like as in "Quantum machine learning beyond kernel methods", arXiv preprint arXiv:2110.13162 (2021)". All these approaches consider problems where the goal is to find the optimal solution(s) which minimize a predefined cost function. Technically, they target to solve single objective optimization tasks. What is still missing is an equivalent quantum approach which targets the solutions of a multi-objective optimization problem.

There are a few approaches which actually utilize quantum hardware and consider multi-objective problems. In "Multiobjective variational quantum optimization for constrained problems: an application to Cash Management, arXiv:2302.04196, https://doi.org/10.48550/arXiv.2302.04196", a VQE quantum circuit and a coupled classical NSGAII algorithm is applied to it. From the quantum state prepared by the quantum apparatus, they calculate classically two objective functions: the cost function, which implements the actual goal when minimized and the probability to find feasible solutions in the final state. The target is not to map a full Pareto front, but arrive at one optimal solutions point, where the probability to find feasible solutions is very close to one and the cost function is minimized. In effect, this method is a constraint handling method, where a classical multi-objective optimization is used to efficiently explore the search space of feasible and infeasible solutions. No quantum aspects of the quantum computation is utilized to arrive at the solution of a multi-objective problem. Despite the problems being attacked becoming more realistic in nature, one central feature of real-world problems is still not much considered: realistic problems often deal with multiple conflicting objectives such cost (which should be as low as possible), quality (which should be as high as possible), user satisfaction (which should be as large as possible), CO2 footprint (which should be as low as possible), .... These objectives are usually in a tradeoff relation where solutions which have very good values in one objective, e.g., high quality, are not very good in another objective, i.e., also have high cost. Therefore, the target of multi-objective optimization is to find a whole set of solutions (not only one) which give a good approximation to the so-called Pareto Front (PF), which is the best achievable set of trade-off set of solutions. Each solution in the PF is equal or better in at least one objective and at the same time worse in at least one other objective than any other solution in the PF.

"Multi-Objective Routing Optimization for 6G Communication Networks Using a Quantum Approximate Optimization Algorithm", Sensors 22(19), 7570 (2022) doi:10.3390/s22197570 describes solving a multi-objective problem by iteratively solving many constrained single-objective problems. The quantum computer is only used to solve single-objective problems. Each single-objective problem optimizes only one objective while imposing constraints on the other objectives. It does not utilize the quantum computer to get a population of solutions directly.

Several papers exist which utilize so-called nondominated quantum optimization (NDQO) and modifications thereof like multi-objective decomposition quantum optimization (MODQO) or non-dominated quantum iterative optimization (NDQIO) described in "Quantum-Assisted Routing Optimization for Self-Organizing Networks", IEEE Access 2, 614-632 (2014) doi: 10.1109/ACCESS.2014.2327596, "Non-Dominated Quantum Iterative Routing Optimization for Wireless Multihop Networks", IEEE Access 3, 1704-1728 (2015) doi: 10.1109/ACCESS.2015.2478793 or "Quantum-Assisted Joint Multi-Objective Routing and Load Balancing for Socially-Aware Networks", IEEE Access 4, 9993-10028 (2016) doi: 10.1109/ACCESS.2016.2629671. All these approaches target to find the Pareto optimal solution set to a multi-objective problem. They do so by utilizing a quantum computing apparatus. They specifically design a quantum circuit that evaluates Pareto dominance relations between individual solutions with the help of auxiliary qubits. Then they use variants / extensions of Grover search to search for novel good candidate solutions which they then can possible insert into the current approximation of the Pareto front. These algorithms are specifically tailored to solve one single problem and use complex circuits to evaluate Pareto-dominance relations between sets of solutions. They cannot be applied to general multi-objective optimization problems directly, and in particular they cannot be executed on NISQ devices but require fully fault tolerant and error corrected quantum hardware not available in the near- to mid-term future.

However, there is still a need to directly address optimization of multiple conflicting objectives to enable an efficient calculation of a plurality of optimized solutions of the problem. The current state of art does not allow for handling multi-objective optimization problems natively on quantum hardware devices.

It is to be noted that in the following explanation, "classical computing component" may be a classical computer, and the "quantum computing component" or "quantum component" may be a universal or special-purpose purpose quantum computing device.

The current invention addresses the above mentioned problem to find solutions of realistic real world problems, specifically known from the energy management domain, on current and future quantum hardware devices employing a quantum-native multi-objective quantum optimization approach according to the method and computer system defined in the independent claims.

The dependent claims define advantageous aspects and features.

The invention encompasses the utilization of the quantum superposition, which is inherent to quantum states, as a resource to encode a complete population of solutions of a multi-objective optimization algorithm. The quantum circuit is designed in such a way as to increase the diversity in the population and also improve all objectives such that they give a good approximation to the Pareto front.

The method and apparatus for obtaining a preferably complete set of ${N}_{PF} ∈ {ℕ}^{+}$ Pareto-optimal solutions, $ℙ S = {\left\{{x}_{i}\right\}}_{i = 1}^{{N}_{PF}}$, to a given multi-objective optimization problem with M different objectives $\vec{C} \left(x\right) = {\left\{{C}_{α}\right\}}_{α = 1}^{M} = {\left({C}_{1}\left(x\right),{C}_{2}\left(x\right),…,{C}_{M}\left(x\right)\right)}^{T}$ where x represents a classical solution of the multi-objective optimization problem, which is comprised of the following components and method steps:
a hybrid quantum-classical computer apparatus, with a quantum computing component and a classical component. The quantum computing component and the classical computing component may be realized as two separate entities, which are capable of exchanging information.

Alternatively, they may be integrated into one device. The quantum computing component realizes a parametrized quantum circuit (PQC) by implementing a unitary quantum operation U(γ) which is parametrized by freely choosable parameters y and which generates a N-qubit or qudit quantum state |ψ_{γ}〉 by applying the unitary operator to a previously defined N-qubit or qudit initial state |ψ₀〉, i.e. |ψ_{γ}〉 = U(γ)|ψ₀〉, which can be decomposed into the measurement basis of the quantum device, $\left|{ψ}_{γ}\right〉 = {\sum }_{c = 1}^{{d}_{H}} {ξ}_{γ , c} \left|{x}_{c}\right〉$ with d_{H} the dimensionality of the Hilbert space, and each measurement basis state |x_{c}〉 encodes one classical solution x_{c},. The classical computing component is able to run a classical optimization algorithm by providing parameters values γ to the quantum computing component, initializing the execution of the PQC and the preparation of the state |ψ_{γ}〉, and then receiving a set of classical solutions from the quantum component as a result and calculating the cost functions for each solution. In essence, both component together are used to solve a multi-objective optimization problem by iteration.

At each iteration t the following steps are performed:
a. generating a set of parameters γₜ on the classical computing component using the classical optimization algorithm and sending them to the quantum component,
b. on the quantum computing component, generating a quantum state |ψ_{γₜ}〉 = U(γₜ)|ψ₀〉 by executing the PQC with the set of parameters γₜ, where the one quantum state |ψ_{γₜ}〉 represents a (whole) set of different N_{S} solutions to the original problem, since it is naturally represented as a quantum mechanical superposition of many measurements basis states, i.e. $\left|{ψ}_{{γ}_{t}}\right〉 = {\sum }_{c = 1}^{{d}_{H}} {ξ}_{{γ}_{t} , c} \left|{x}_{c}\right〉$ and each measurement basis state |x〉 corresponds to one classical solution x of the original optimization problem,
c. using a basis-state selection method to select a set of *N_{S}* ≥ *N_{PF}* basis states ${\left\{\left|{x}_{i}\right〉\right\}}_{i = 1}^{{N}_{S}}$ from the one quantum state |*ψ_{γₜ}*〉 and sending the information of which basis states where selected, i.e., the set of classical solutions ${S}_{t} = {\left\{{x}_{i}\right\}}_{i = 1}^{{N}_{S}}$, to the classical computing component,
d. on the classical computing component calculating a set of objective values consisting of the objective values for each solution in the set of classical solutions, i.e. ${O}_{t} = {\left\{\vec{C}\left({x}_{i}\right)\right\}}_{i = 1}^{{N}_{S}} ≡ \vec{C} \left({S}_{t}\right) ,$
e. generating a new estimate for the Pareto set of solutions, $ℙ {S}_{t} = {\left\{{x}_{i}\right\}}_{i = 1}^{{N}_{PF}}$, and the corresponding Pareto front, $ℙ {F}_{t} = {\left\{\vec{C}\left({x}_{i}\right)\right\}}_{i = 1}^{{N}_{PF}}$, by the classical optimizer incorporating the set of solutions ${S}_{t}$ and the corresponding set of objectives values ${O}_{t}$.According to a preferred embodiment, all those values from previous iterations, ${\left\{{S}_{t ′}\right\}}_{t ′ = 1}^{t - 1}$ and ${\left\{ℙ{F}_{t ′}\right\}}_{t ′ = 1}^{t - 1}$ which are retrieved from an archive 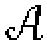 are additionally used.
f. Based on the current set of solutions and the Pareto set and their corresponding sets of objective values, updating the internal state of the classical optimization algorithm and, in case that values from previous iterations shall be used in the generation of a new estimate, updating the archive $A \to A + \left\{t,{γ}^{t},ℙ{S}_{t},ℙ{F}_{t}\right\}$
g. checking a convergence criterion as a stopping criterion, and if the stopping criterion is not satisfied, repeating the process from step a. onwards, until the stopping criterion is fulfilled.

The final results after the iterations have been completed is a good set of Pareto optimal solutions $ℙ {S}_{Final} = {\left\{{x}_{i}\right\}}_{i = 1}^{{N}_{PF}}$ where the corresponding set of objective value vectors $ℙ {F}_{Final} = {\left\{\vec{C}\left({x}_{i}\right)\right\}}_{i = 1}^{{N}_{PF}}$ is an efficient and good approximation to the true Pareto front.

The invention uses quantum superpositions to encode a whole population of solutions into one quantum state. The quantum computing component is designed such that the quantum circuit layout achieves multi-objective evolution of Pareto-optimal solutions as a whole with a true quantum encoding.

According to a preferred embodiment, the quantum component realizes a parametrized quantum circuit (PQC) by implementing a unitary quantum operation *U(y)* which is composed of *N_{L}* layers with different choosable sets of parameters as $U \left(γ\right) = {\prod }_{l = 1}^{{N}_{L}} {U}_{l} \left({γ}_{l}\right)$ and where each layer *l* comprises multiple mixing and phase operators with separately choosable parameter sets *γₗ =* {*γ*_{*X*;}*l*_{,}*γ*_{*P*;*l*}}, and the unitary in each layer has the form ${U}_{l} \left({γ}_{l}\right) = {\prod }_{α = 1}^{M} {e}^{- i {X}_{a} \left({γ}_{X ; l , α}\right)} {e}^{- i {γ}_{H ; l , α} {H}_{α}}$ where the phase unitaries in each layer ~ 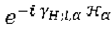 have freely choosable parameters ${γ}_{H ; l , α} ∈ ℝ$ and are generated by the M cost Hamiltonians 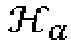 with *α* = 1, ... , *M*, where each cost

Hamiltonian 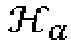 represents one classical objective function *C_{α}*, in the sense that the measurement basis states |x〉 are simultaneous eigenstates of all problem Hamiltonians and the eigenvalues of the problem Hamiltonians are given by the value of the corresponding classical objective function of the corresponding classical solutions, x, i.e. ${H}_{α} \left|x\right〉 = {C}_{α} \left(x\right) \left|x\right〉$ and where the mixing unitaries in each layer, ~ *e^{-i Xα}*(*γ^{X}*;*l,α*)*,* have freely choosable parameters *γ*_{*X*;*l,α*} and are generated by M parametrized mixing operators *X_{α}*( *γ*_{*X*;*l,α*}) with a = 1, ... , M, where the mixing operators do not commute with the cost Hamiltonians, i.e., [*X_{β}*(*γ*_{*X*;*l,β*}), *H_{α}*] ≠ 0,∀*α, β*, and therefore the mixing operators generate transitions between the measurement basis states, *X_{β}*(*γ*_{*X*;*l,β*})|x*ᵢ*〉 *=* Σ*ⱼ ζ_{β,ij}*|*xⱼ*〉 with ${ζ}_{β , ij} ∈ ℂ$.

According to another preferred embodiment, the quantum component realizes parametrized quantum circuit (PQC) by implementing a unitary quantum operation *U(y)* which is composed of *N_{L}* layers with different choosable sets of parameters as $U \left(γ\right) = {\prod }_{l = 1}^{{N}_{L}} {U}_{l} \left({γ}_{l}\right)$ and where each layer *l* comprises multiple mixing and phase operators with separately choosable parameter sets *γₗ* ∈ {*γ_{X;l}γ_{P;l}*}, and which has the form ${U}_{l} \left({γ}_{l}\right) = {\prod }_{k = 1}^{{N}_{P}} {e}^{- i {X}_{k} \left({γ}_{X ; l , k}\right)} {e}^{- i {γ}_{P ; l , k} {P}_{k}}$ where the phase unitaries in each layer ~ *e*^{*-i γ^{P}*;*l,k P^{k}*} have freely choosable parameters
${γ}_{P ; l , k} ∈ ℝ$ and are generated by specific sums over the cost Hamiltonians 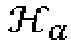 ${P}_{k} = {\sum }_{α = 1}^{M} {α}_{k , α} {H}_{α}$

The coefficients in these sums ${α}_{k , α} ∈ ℝ$ may specify reference vectors *a̅ₖ* which have to fulfill ${\sum }_{α} {α}_{k , α}^{2} = {\vec{α}}_{k}^{T} ⋅ {\vec{α}}_{k} = 1$ and *a_{k,α}* ≥ 0 for each k, and for each k, define a certain direction in the space of objective values and thus can either reflect one user preference and are determined in the beginning as part of the problem definition, or determined by the state of the art procedure for reference vectors as described in "A Reference Vector Guided Evolutionary Algorithm for Many-Objective Optimization", IEEE Transactions on Evolutionary Computation 20(5), 773-791

(2016) doi 10.1109/TEVC.2016.2519378 or ".Adaptation of Reference Vectors for Evolutionary Many-objective Optimization of Problems with Irregular Pareto Fronts", IEEE Congress on Evolutionary Computation (CEC), 1726-1733 (2019) doi 10.1109/CEC.2019.8790214, which can either be fixed reference vectors determined prior to iteration of the hybrid quantum-classical algorithms or adapted during the iterations in each iteration step t.

Each cost Hamiltonian 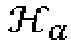 represents one classical objective function *C_{α}*, in the sense that the measurement basis states |x〉 are simultaneous eigenstates of all cost Hamiltonians and the eigenvalues of the problem Hamiltonians are given the value of the corresponding classical objective function of the corresponding classical solutions, x, i.e. ${H}_{α} \left|x\right〉 = {C}_{α} \left(x\right) \left|x\right〉$ and where the mixing unitaries in each layer, *e^{-i Xk}*( *γ^{X}*;*l,k*), have freely choosable parameters *γ*_{*X*;*l,k*} and are generated by M parametrized mixing operators *X_{α}*(*γ*_{*X*;*l,k*}) with k= 1, ..., *N_{P}*, where the mixing operators do not commute with the cost Hamiltonians, i.e., [*Xₖ*(*γ*_{*X*;*l,k*})*,* 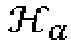 ] ≠ 0,∀*k, α,* and therefore the mixing operators generate transitions between the measurement basis states, *Xₖ*(*γ*_{*X*;*l,k*})lx*ᵢ*〉 *=* Σ*ⱼ ζ_{k,ij}*|x*ⱼ*〉 with ${ζ}_{k , ij} ∈ ℂ$,
and where the *N_{S}* basis states which represent the set of solutions and which are encoded in the quantum state |*ψ_{γ}*〉 as superpositions, are extracted at each iteration by estimating the full state tomography, i.e., by estimating the spectral weight *ξ*_{*γ*,*i*} with which each basis state |*xᵢ*〉 contributes to the final state |*ψ_{γ}*〉, which is given by the absolute square of the overlap, i.e. ${ξ}_{γ , i} = {\left|\left〈\left.{x}_{i}\right|{ψ}_{γ}\right〉\right|}^{2} ,$ and then selecting those *N_{S}* classical solutions states which have the largest spectral weights, and adding those to the set of selected solutions ${S}_{t} = {\left\{{x}_{i}\right\}}_{i = 1}^{{N}_{S}}$ obtained in this iteration *t.*

According to another preferred embodiment the quantum component realizes parametrized quantum circuit (PQC) by implementing a unitary quantum operation *U(y)* which is composed of *N_{L}* layers with different choosable sets of parameters as $U \left(γ\right) = {\prod }_{l = 1}^{{N}_{L}} {U}_{l} \left({γ}_{l}\right)$ and where each layer *l* comprises multiple mixing and phase operators with separately choosable parameter sets *γₗ* ∈ {*γ*_{*X*;}*_{l,}γ*_{*V*;*l*}}, and which has the form ${U}_{l} \left({γ}_{l}\right) = {e}^{- i {X}_{l} \left({γ}_{X ; l}\right)} {e}^{- i {γ}_{V ; l} V}$ where the phase unitaries in each layer *e*^{*-i γ^{V}*;*l V*} have freely choosable parameters ${γ}_{V ; l} ∈ ℝ$ and are generated by the operator *V* which estimates the hypervolume in objective space which is spanned by a population of states as it is encoded by a quantum superposition of states, i.e. $V \left|ψ\right〉 = f \left({\left\{{ξ}_{i}\right\}}_{i = 1}^{{N}_{S}}\right) HV \left({\left\{\vec{C}\left({x}_{i}\right)\right\}}_{i = 1}^{{N}_{S}}\right) \left|ψ\right〉$ **where** the function $HV \left({\left\{\vec{C}\left({x}_{i}\right)\right\}}_{i}^{{N}_{S}}\right)$ gives the hypervolume which is spanned by the objective value vectors $\vec{C} \left({x}_{i}\right) = {\left\{{C}_{α}\left({x}_{i}\right)\right\}}_{α = 1}^{M}$ of the set of solutions ${\left\{{x}_{i}\right\}}_{i = 1}^{{N}_{S}}$ and the function $f \left({\left\{{ξ}_{i}\right\}}_{i = 1}^{{N}_{S}}\right)$ has function values between zero and one, i.e. $0 \leq f \left({\left\{{ξ}_{i}\right\}}_{i = 1}^{{N}_{S}}\right) \leq 1$, and allows for a down-scaling of the hypervolume of a particular set of solutions in case the individual amplitudes of some of the contributing states are unfavorably small or the distribution of the amplitudes is too inhomogeneous,
and where each cost Hamiltonian 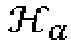 represents one classical objective function *C_{α}*, in the sense that the measurement basis states |x〉 are simultaneous eigenstates of all cost Hamiltonians and the eigenvalues of the problem Hamiltonians are given the value of the corresponding classical objective function of the corresponding classical solutions, x, i.e. ${H}_{α} \left|x\right〉 = {C}_{α} \left(x\right) \left|x\right〉$ and where the mixing unitaries in each layer *e^{-i Xl}*( *γ^{X}*;*l*)*,* haves freely choosable parameters ${γ}_{X ; l} ∈ ℝ$ and are generated by the parametrized mixing operator *Xₗ*(*γ*_{*X*;*l*}), where the mixing operators do not commute with the cost Hamiltonians, i.e., [*Xₗ*(*γ*_{*X*;*l*}), 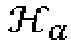 ] ≠ 0, ∀*α, l*, and therefore the mixing operators generate transitions between the measurement basis states, ${X}_{k} \left({γ}_{X ; l}\right) \left|{x}_{i}\right〉 = {\sum }_{j} {ζ}_{k , ij} \left|{x}_{j}\right〉 with {ζ}_{k , ij} ∈ ℂ$

It is further preferred that the mixing operator in each layer is given by a sum over all x-angular momentum operators of each qudit variable and where the coefficient of each individual angular momentum operators is given by the freely choosable parameter ${γ}_{X ; k} ∈ ℝ$, i.e., ${X}_{k} \left({γ}_{X ; k}\right) = {\sum }_{i = 1}^{N} {γ}_{X ; k , i} {L}_{x ; i}$ where *L*_{*x*;*i*} is the x-angular momentum operators of the *i*^{th} qubit or qudit with *i* = 1, ..., *N,* representing the *i*^{th} classical search variable and N the total number of qubits/qudits.

As an alternative embodiment, the mixing operator in each layer is given by a sum over all generalized Pauli X operators of each qudit variable as, for example, described in Y. Wang, Z. Hu, B. C. Sanders, and S. Kais, Qudits and High-Dimensional Quantum Computing, Frontiers in Physics 8 (2020), and where there is one coefficient for each physical qudit which are given by the freely choosable parameters ${γ}_{X ; l , i} ∈ ℝ$, i.e., ${X}_{k} \left({γ}_{X ; l , i}\right) = {\sum }_{i = 1}^{N} {γ}_{X ; l , i} {X}_{i}$ where *Xᵢ* is the generalized Pauli X operator of the *i*^{th} qubit or qudit with *i* = 1, ... , *N*, and is given by ${X}_{i} = {\sum }_{z = 0}^{L - 1} \left|\left(z+1\right) mod L\right〉 \left〈z\right|$ and local qudit dimension L.

In a preferred embodiment the *N_{S}* basis states which represent the set of solutions and which are encoded in the quantum state |*ψ_{γ}*〉 as superpositions, are extracted at each iteration by by sampling from the quantum state |*ψ_{γ}*〉 i.e. sampling x from the Born rule probability *P*(x,γ) = |〈x|*ψ_{γ}*〉|² which is realized by repeatedly measuring the quantum state, and adding for each measured state |x*ₘ*〉 the corresponding classical solution x*ₘ* to the set of selected states, 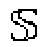 until *N_{S}* different states have been measured and added to the set of selected states, $S = {\left\{{x}_{i}\right\}}_{i = 1}^{{N}_{S}}$.

The method and apparatus may further be applied to solve a multi-objective bi-directional electric vehicle charging problem where the target is to find a set $ℙ S = {\left\{{x}_{i}\right\}}_{i = 1}^{{N}_{PF}}$ of Pareto optimal configurations of discrete integer variables x = (ℓ₀*,* ℓ₁, ..., ℓ*_{Nₜₒₜ}*), which encode a full charging and service schedule for a fleet of electric vehicles and where multiple objectives such as electricity cost for fulfilling all charging demands, customer satisfaction, maximizing utilization of renewable energies, minimizing electricity drawn from the grid, minimizing the peak electricity power consumption, etc are considered such that a good approximation of the Pareto front, $ℙ F$ is obtained.

The method and apparatus according to one of the above described configurations may be applied to obtain an efficient frontier of possible portfolio compositions as formulated by the Markowitz model of Modern portfolio theory by finding the compositions of a portfolio over time as specified by integer variables x = {*ω*_{*n*,*s*}} which specify the investment amount into asses *n* at time s and where the efficient frontier is spanned by those portfolio compositions which have optimal tradeoffs between maximizing return and minimizing risk and thus pose a two-objective optimization problem.

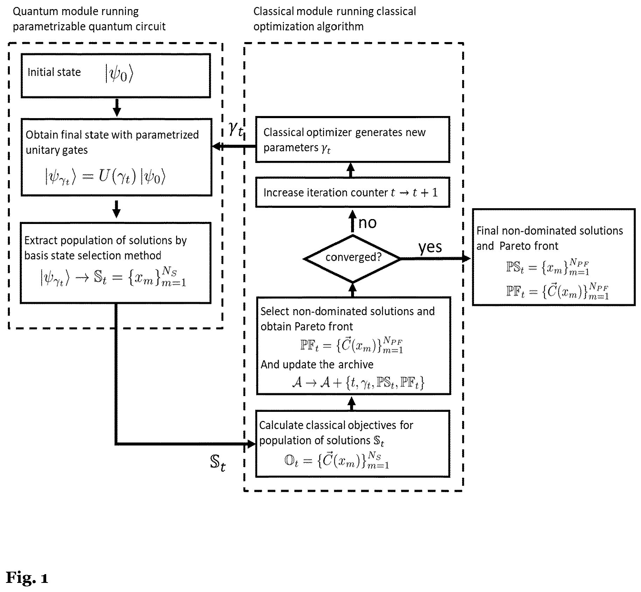

The invention will now be further described with reference to the attached drawing, in which
- Fig. 1: shows a schematic of a hybrid quantum-classical computer system illustrating the method steps according to a preferred implementation of the invention.

**The proposed** computer implemented method and hybrid quantum-classical computer system target to solve combinatorial integer multi-objective optimization problems with two or more objectives to be minimized. Typically, these objectives cannot be minimized simultaneously by some optimal solutions since they are in tradeoff relations to each other. Therefore, the target of the multi-objective optimization approach is to find a whole set of different solutions, called the Pareto set, where each solution realizes one optimal tradeoff between the objectives. The set of solutions therefore should map all possible tradeoff between the objectives, which is called the Pareto front.

The proposed inventive method and apparatus enables the treatment of such problems natively on current NISQ quantum hardware. The crucial aspect of the present invention is provided by representing a full population of candidate solutions to the optimization problem as one quantum state and extracting whole sets of Pareto-optimal solutions from this one quantum state. According to the invention, the quantum circuits of the proposed computer implemented method and hybrid quantum-classical computer system increase the diversity of the population by utilization of all the cost function Hamiltonians corresponding to all classical objectives.

According to this description, the expression "classical" always refers to known computation as performed in the past using digital computer systems only.

The proposed computer implemented method and hybrid computer system comprises a classical computing component and a quantum computing component. Both components are configured to transfer and receive information from the respective other component such that a shared computation can be achieved in order to solve the multi objective integer optimization problem. A set of integer variables of the multi-objective integer optimization problem, x = (a₁, a₂, ... , a_{N}), where aᵢ E [0, ..., L - 1] are finite integers, are represented by the qubit (for L = 2) or qudit (for L > 2) degrees of freedom of the quantum hardware device, i.e., $\left|x\right〉 = \left|{a}_{1},{a}_{2},…,{a}_{N}\right〉 .$

Each of those states is a basis state in the measurement basis and fulfils the orthonormality conditions $\left〈\left.x′\right|x\right〉 = \left〈{a}_{1}^{′},{a}_{2}^{′},…,{a}_{N}^{′}\left|{a}_{1},{a}_{2},…,{a}_{N}\right.\right〉 = {δ}_{{a}_{1}^{′} , {a}_{1}} ⋯ {δ}_{{a}_{N}^{′} , {a}_{N}}$ where *δ*_{*b*,*a*} is the Kronecker delta, ${δ}_{b , a} = \left\{\begin{matrix}1 & if a = b \\ 0 & if a \neq b\end{matrix}\right. .$

This encoding means that all possible solutions to the original multi objective integer optimization problem are represented by the measurement basis states of the quantum computing component. One advantage of using a quantum computer for approaching this problem is given by the fact that a general quantum state is naturally a superposition of all basis states, i.e. a superposition of all possible solutions to the problem, $\left|ϕ\right〉 = {\sum }_{c = 1}^{{d}_{H}} {ξ}_{c} \left|{x}_{c}\right〉$ with complex coefficient ${ξ}_{c} ∈ ℂ$ and where Σ*_{c}*|*ξ_{c}*|² = 1 and where *c* = 1, *... , d_{H}* enumerates all basis states of the Hilbert space of dimensions *d_{H}* = *L^{N}* for N variables (i.e. qubits or qudits) with L states per variable (i.e. qubits or qudits).

The invention utilizes a parametrized quantum circuit on the quantum computing component, which employs unitary gate operations that are applied to a predefined fixed initial state |*Ψ*₀〉. Such application of the unitary gate operations leads to the final quantum state $\left|ψ\right〉 = U \left(γ\right) \left|{ψ}_{0}\right〉 .$

According to the invention, this state encodes a full population of *N_{S}* solutions candidates of the original problem, $\left|ψ\right〉 = {\sum }_{i = 1}^{{N}_{S}} {ξ}_{i} \left|{x}_{i}\right〉 + {\sum }_{j = {N}_{S} + 1}^{{d}_{H}} {δ}_{j} \left|{x}_{j}\right〉$ where the first sum are those basis states with large weights and which represents the full population, $S = {\left\{{x}_{i}\right\}}_{i = 1}^{{N}_{S}}$, and the second sum is negligibly small, i.e. ${\sum }_{i = 1}^{{N}_{S}} {\left|{ξ}_{i}\right|}^{2} = 1 - ϵ$ and ${\sum }_{j = {N}_{S} + 1}^{{d}_{H}} {\left|{δ}_{j}\right|}^{2} = ϵ ≪ 1$, respectively, such that the final state truly encodes the solution population, $\left|ψ\right〉 \approx {\sum }_{i = 1}^{{N}_{S}} {ξ}_{i} \left|{x}_{i}\right〉$

A state selection mechanism, such as full state tomography, classical shadows or measurement-based sampling allows the full set of solutions to be extracted from the quantum state, $\left|ψ\right〉 ⇒ S = {\left\{{x}_{m}\right\}}_{m = 1}^{{N}_{S}} .$

Suitable techniques are described in "Efficient quantum state tomography", Nat Commun 1, 149 (2010) doi 10.1038/ncomms114, "Predicting many properties of a quantum system from very few measurements", Nat. Phys. 16, 1050-1057 (2020) doi 10.1038/s41567-020-0932-7 or "Quantum Computation and Quantum Information", Cambridge: Cambridge University Press. (2010) doi 10.1017/CBO9780511976667. The unitaries of the current invention are specifically designed to increase the contributions to the superposition from different states, which provide the optimal trade-off solutions. That means, the population of candidate solutions represented by one quantum state will provide a good approximation to the Pareto set of solutions $ℙ S$, $\left|ψ\right〉 = {\sum }_{i = 1}^{{N}_{PF}} {ξ}_{i} \left|{x}_{i}\right〉 ⇔ ℙ S = {\left\{{x}_{i}\right\}}_{i = 1}^{{N}_{PF}} .$

In the proposed invention, the set of solutions will be sent from the quantum computing component to the classical computing component, where for each solution the vector of objective values will be calculated which generates the Pareto front, $ℙ F = {\left\{\vec{C}\left({x}_{i}\right)\right\}}_{i = 1}^{{N}_{PF}} .$

Here, the vector *̅C̅*̅(*x*) represents the classical M objective functions of the original problem, $\vec{C} \left(x\right) = {\left\{{C}_{a}\right\}}_{a = 1}^{M} = {\left({C}_{1}\left(x\right),{C}_{2}\left(x\right),…,{C}_{M}\left(x\right)\right)}^{T} .$

**The final** result after executing the proposed method using the inventive hybrid quantum-classical computing system is the Pareto set of solutions $ℙ S$, which approximate the Pareto front $ℙ F = {\left\{\vec{C}\left({x}_{i}\right)\right\}}_{i = 1}^{{N}_{PF}}$. In that way, the user can inspect the Pareto optimal solutions and then select the best tradeoff solutions for their application in mind. The proposed method and apparatus utilizing the PQC is effective in producing a good approximations to the Pareto front since all possible solutions are typically present in the superposition of the initial state |*ψ*₀〉 of the quantum computing component. The proposed phase operators in the PQC do assign different phases to each individual basis state|*ψ*〉. In that way, the classical optimizer can tune the parameters of the PQC to give the largest diversity and include mostly non-dominated solutions in the quantum state, which maximize hypervolume indicator which implies a good approximation to the true Pareto front.

Hereinafter, the invention will be described for two different implementation examples, which are typical for multi objective problems:

The operation of a fleet of electric vehicles (EVs) constitutes an archetypical optimization problem with several challenges. The central aspect of this operation is to provide a service to the customer such that for all vehicles, the requests of the customers can be fulfilled while at the same time reducing the electricity cost for charging all EVs as much as possible.

In one formulation of the problem, the target is to find the optimal charging schedule of a fleet of *N_{EV}* electric vehicles (EVs) over *N_{T}* time slots. The search variable x defines the charging schedule of the complete EV fleet. A schedule consists of *N_{EV}* · *N_{T}* discrete integer variables, $x = \left({l}_{1 , 1},{l}_{2 , 1},…,{l}_{{N}_{EV} , 1},{l}_{2 , 1},…,{l}_{n , s},…,{l}_{{N}_{EV} , {N}_{T}}\right)$ where each integer variable can have only one of L values, ℓ*_{n,s}* ∈ [0,1, ..., L - 1]. The value of the integer ℓ*_{n,s}* determines the charging power level of vehicle *n* in time slot s, i.e. *p*(*s,n*) = *p*₀ ℓ*_{n,s}* where the *p*₀ is the conversion constant and thus defines the spacing between the charging levels. There are four common objectives, which should all be simultaneously minimized. These are expressed by the following four objective functions: ${C}_{1} \left(x\right) = \frac{1}{{N}_{1}} {\sum }_{s = 1}^{{N}_{T}} P \left(s\right) \left({\sum }_{n = 1}^{{N}_{EV}} {p}_{0} {l}_{n , s} - PV \left(s\right)\right) \left(OBJ1, total cost\right)$ ${C}_{2} \left(x\right) = \frac{1}{{N}_{2}} {\sum }_{n = 1}^{{N}_{EV}} {\left({\sum }_{s = 1}^{{N}_{T}} {p}_{0} {l}_{n , s} - {E}_{tot , n}\right)}^{2} \left(OBJ2, fairness\right) ,$ ${C}_{3} \left(x\right) = \frac{1}{{N}_{3}} {\sum }_{s = 1}^{{N}_{T}} {\left({\sum }_{n = 1}^{{N}_{EV}} {p}_{0} {l}_{n , s} - PV \left(s\right)\right)}^{2} \left(OBJ3, PV usage\right) ,$ ${C}_{4} \left(x\right) = \frac{1}{{N}_{4}} {\sum }_{s = 1}^{{N}_{T}} {\left({\sum }_{n = 1}^{{N}_{EV}} {p}_{0} {l}_{n , s}\right)}^{2} \left(OBJ4, power variations\right) .$ with the normalization constants *N*₁ = *N_{T}N_{EV}* 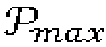 /*p*₀, ${N}_{2} = {N}_{T}^{2} {N}_{EV} \left(L-1\right) / {p}_{0}^{2} , {N}_{3} = {N}_{T} {N}_{EV}^{2} / {p}_{0}^{2}$, and ${N}_{4} = {N}_{T} {N}_{EV}^{2} / {p}_{0}^{2}$ to ensure that the numerical values of the objectives are of approximately the same order of magnitude.

The first objective (*OBJ*1) represents to total electricity cost for the complete charging schedule. PV(s) denotes the surplus energy produced by a photo-voltaic (PV) system at time slot s which is available for charging the EVs, and the function 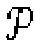 (*s*) gives the price for buying or selling energy from or to the grid at time slot s. 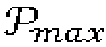 denotes the maximal unit-price for electricity. When the total electricity demand is larger than the PV surplus, energy needs to be bought from the grid, while when is smaller the term in brackets reverses sign end energy is sold to the grid leading to a negative cost, i.e. income.

The second objective (*OBJ*2) represents a measure for fairness between the different EVs/customers by minimizing the difference between the desired energy of each vehicle, *E_{tot,n}*, and the energy provided to each EV/customer. This is achieved since this term is proportional to the variance of the difference between the charging energy provided to each EV n and its desired value, *E*_{*tot*,*n*}, which strongly favors equal distribution.

The third objective (*DBJ*3) tries to only use the PV surplus energy for charging the EVs at each time slot s, and consequently the objective function tries to minimize the difference between used surplus PV energy and current total charging energy at each time slot. Minimizing this objective is a means to make the service operation independent of the electricity grid.

The fourth objective (*OBJ*4) targets the equal distribution of the charging power over the time slots, and in particular tries to reduce peaks in the charging power at all time slots. The reasoning behind this is two-fold: (i) for company settings, the peak electricity power over a billing period has a direct influence on the charged electricity bill and therefore strong demand peaks need to be avoided (ii) strong variations in the electricity demand generally put a lot of pressure on the energy grid provider which needs to balance these out. Both aspects are met by reducing the overall variation over time of the total energy demand, i.e. the variance, as formulated in this objective.

The problem characterized by the objectives (OBJ1) - (OBJ4) of the above described example defines a combinatorial integer multi-objective optimization problem with M = 4 objectives, which all need to be minimized. However, the present invention is not limited to four objectives and less or more objectives may define the multi objective optimization problem. These objectives typically cannot be minimized simultaneously by some optimal solutions since they are in tradeoff relations to each other. Therefore, the target of the multi-objective optimization approach according to the invention is to provide a computationally efficient way to find a whole set of different solutions, called the Pareto set, where each solution realizes one optimal tradeoff between the objectives. The set of solutions therefore should map all possible tradeoff between the objectives which is called the Pareto front.

For the EV charging problem the discrete search variables are given by the variables x = (ℓ_{1,1}, ℓ_{2,1}, ... , ℓ_{*n*,1}, ℓ_{2,1}, ... , ℓ*_{n,s}*, ... , ℓ*_{N_{EV},}N_{T}*) with *ℓ_{n,s}* E [0,1, ... , *L* - 1] which encode the full charging schedule of all EVs. The classical cost functions, i.e. the objectives to be minimized are expressed with those variables, as is exemplarily done in (OBJ1) - (OBJ4).

In the EV charging problem the encoding into the quantum formulation is as follows: each qudit of the quantum computing component represents one charging power level ℓ*_{n,s}* ∈ [0, *... , L* - 1] of one EV *n* ∈ [1, ... , *N_{EV}*] in one time slot s ∈ [1, ... , *N_{T}*]*.* The quantum states of the measurement basis are given by $\left|x\right〉 = \left|{l}_{1 , 1},{l}_{2 , 1},…,{l}_{{N}_{EV} , 1},{l}_{2 , 1},…,{l}_{n , s},…,{l}_{{N}_{EV} , {N}_{T}}\right〉$ *(ENC)*
with ℓ*_{n,s}* ∈ [0,1, ... , *L* - 1] which represent all the different possibilities for the charging schedule of the whole EV fleet. This encoding implies that all possible solutions to the EV charging problem are represented by the measurement basis states of the quantum circuit. One advantage of using a quantum computer for approaching this problem is given by the fact that a general quantum state in this basis is naturally a superposition of all basis states, i.e. a superposition of all possible solutions to the problem, $\left|ϕ\right〉 = {\sum }_{x} {c}_{x} \left|x\right〉$ with complex coefficient ${c}_{x} ∈ ℂ$ and where Σₓ|*c*ₓ|² = 1.

The classical M objective functions *C*₁(x) to *C*₄(x) as defined above are represented by M cost Hamiltonians. Their functional form is given by a quadratic polynomial in the search variables. This directly allows to formulate the corresponding quantum Hamiltonians for each objective by taking the classical objective functions *C*₁(x) to *C*₄(x) and replacing the search variables ℓ*_{n,s}* which specify the charging level of EV n in times slot *s* with the corresponding *z* -angular momentum operator *L*_{*z*;*n,s*} of the qudit encoding the corresponding variable, i.e. by using the replacement rule ${l}_{n , s} \to {L}_{z ; n , s} + \frac{L - 1}{2}$. This leads to cost Hamiltonians 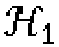 to 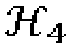 which are also quadratic polynomials in the angular momentum operators, which therefore can be directly implemented with the elementary gate- or pulse-operators on current quantum hardware without further pre-processing or approximation. The quadratic form is therefore the starting point for current state of the art quantum approaches, as it can be found for example in "Encoding-Independent Optimization Problem Formulation for Quantum Computing", arXiv:2302.03711 (2023) or "Noisy intermediate-scale quantum (NISQ) algorithms", Rev. Mod. Phys. 94, 015004.

The measurement basis states are eigenstates to the *z* -angular momentum operators *L*_{*z*;*n,s*} and the eigenvalues are the charging levels, i.e. $\left({L}_{z ; n , s}+\frac{L - 1}{2}\right) \left|{l}_{1 , 1},…,{l}_{n , s},…,{l}_{{N}_{EV} , {N}_{T}}\right〉 = {l}_{n , s} \left|{l}_{1 , 1},…,{l}_{n , s},…,{l}_{{N}_{EV} , {N}_{T}}\right〉 .$

With this, the explicit form of the corresponding cost Hamiltonians representing the objective functions are ${H}_{1} = \frac{1}{{N}_{1}} {\sum }_{s = 1}^{{N}_{T}} P \left(s\right) \left({\sum }_{n = 1}^{{N}_{EV}} {p}_{0} ⋅ \left({L}_{z ; n , s}+\frac{L - 1}{2}\right) - PV \left(s\right)\right) \left(HAM1, total cost\right)$ ${H}_{2} = \frac{1}{{N}_{2}} {\sum }_{n = 1}^{{N}_{EV}} {\left({\sum }_{s = 1}^{{N}_{T}} {p}_{0} ⋅ \left({L}_{z ; n , s}+\frac{L - 1}{2}\right) - {E}_{tot , n}\right)}^{2} \left(HAM2, fairness\right) ,$ ${H}_{3} = \frac{1}{{N}_{3}} {\sum }_{s = 1}^{{N}_{T}} {\left(PV\left(s\right)-{\sum }_{n = 1}^{{N}_{EV}} {p}_{0} ⋅ \left({L}_{z ; n , s}+\frac{L - 1}{2}\right)\right)}^{2} \left(HAM3, PV usage\right) ,$ ${H}_{4} = \frac{1}{{N}_{4}} {\sum }_{s = 1}^{{N}_{T}} {\left({\sum }_{n = 1}^{{N}_{EV}} {p}_{0} ⋅ \left({L}_{z ; n , s}+\frac{L - 1}{2}\right)\right)}^{2} \left(HAM4, power variations\right) .$

The measurement basis states are also simultaneous eigenstates of these cost Hamiltonians (since the latter are polynomials in the *L*_{*z*;*n,s*}), and the eigenvalues are given by the value of the objective functions of the corresponding configuration, ${H}_{α} \left|{l}_{1 , 1},…,{l}_{n , s},…,{l}_{{N}_{EV} , {N}_{T}}\right〉 = {C}_{α} \left({l}_{1 , 1},…,{l}_{n , s},…,{l}_{{N}_{EV} , {N}_{T}}\right) \left|{l}_{1 , 1},…,{l}_{n , s},…,{l}_{{N}_{EV} , {N}_{T}}\right〉 .$

The quantum computing component, which executes the parametrized quantum circuit (PQC), prepares the state, $\left|ψ\right〉 = {\prod }_{l = 1}^{{N}_{L}} {U}_{l} \left({γ}_{l}\right) \left|{ψ}_{0}\right〉 \left(PQC\right)$ which consists of *N_{L}* different unitary operations *Uₗ* called layers and where each unitary operator is freely parametrizable with a set of parameters *γₗ* (*l* = 1, *... , N_{L}*)*.* The initial state of the circuit is given by the equal superposition of all possible states, $\left|{ψ}_{0}\right〉 = \frac{1}{\sqrt{{d}_{H}}} {\sum }_{x} \left|x\right〉 ,$ where *d_{H} = L^{N^{EV} N^{T}}* is the dimensionality of the Hilbert space for *N_{EV}* EVs, *N_{T}* time slots, and where each time slot can be in one of L charging levels, encoded by *N_{EV}* · *N_{T}* qudits with local dimensionality L. In the current example, the unitary operation in each layer *l* has the form ${U}_{l} \left({γ}_{l}\right) = {\prod }_{k = 1}^{{N}_{P}} {e}^{- i X \left({γ}_{X ; l , k}\right)} {e}^{- i {γ}_{P ; l , k} {P}_{k}}$ which is a product over *N_{P}* different terms and each product term consists of a so-called mixing term, ~ *e*^{*-i X*( *γ*^{X};*l,k*)} and a phase operator ~ *e*^{*-i γ^{P}*;}*^{l,k P^{k}}.*

The mixing unitary has *N_{P}N_{EV}N_{T}* freely choosable parameters ${γ}_{X ; l , k , n , s} ∈ ℝ$ and it is generated by the Hermitian mixing operator X. The mixing operator in this example is given by the sum over all x-angular momentum operators of each physical qudit, i.e., $X \left({γ}_{X ; l , k}\right) = {\sum }_{s = 1}^{{N}_{T}} {\sum }_{n = 1}^{{N}_{EV}} {γ}_{X ; l , k , n , s} {L}_{x ; n , s} ,$ *(MIXEX)*
where *L*_{*x*;*n,s*} is the usual x-angular momentum operator of the physical qudit encoding the charging power at time slot s of EV *n*. The action of *L*_{*x*;*n,s*} is given by the standard action of angular momentum operators, $\begin{matrix}{L}_{x ; n , s} \left|{l}_{1 , 1},…,{l}_{n , s},…,{l}_{{N}_{EV} , {N}_{T}}\right〉 \\ = \frac{1}{2} \sqrt{\left(L-{l}_{n , s}-2\right) \left({l}_{n , s}+2\right)} \left|{l}_{1 , 1},…,{l}_{n , s}+1,…,{l}_{{N}_{EV} , {N}_{T}}\right〉 \\ + \frac{1}{2} \sqrt{\left(L-{l}_{n , s}\right) {l}_{n , s}} \left|{l}_{1 , 1},…,{l}_{n , s}-1,…,{l}_{{N}_{EV} , {N}_{T}}\right〉\end{matrix}$ and as such generates transitions between and creates superpositions of basis states, i.e. different solutions.

Each of the *N_{P}* phase terms in each layer comes with one freely chooseable parameter, ${γ}_{P ; l , k} ∈ ℝ$ and each term is generated by a Hermitian operator which is one specific sum over the four cost Hamiltonians of *(HAM1)* - *(HAM4),* i.e. ${P}_{k} = {\sum }_{α = 1}^{4} {α}_{k , α} {H}_{α ,} ,$ *(PHASEEX)*

The coefficients *a_{k,α}* ≥ 0 define reference vectors *a̅ₖ* which need to fulfill the condition ${\sum }_{α = 1}^{4} {α}_{k , α}^{2} = {\vec{α}}_{k}^{T} ⋅ {\vec{α}}_{k} = 1$, i.e., the vectors *a̅ₖ* be unit vectors and thus each *a̅ₖ* defines a direction in the objective space. These are the quantum analog of a the reference vectors in classical multi-objective optimization as described in "A Reference Vector Guided Evolutionary Algorithm for Many-Objective Optimization", IEEE Transactions on Evolutionary Computation 20(5), 773-791 (2016) doi 10.1109/TEVC.2016.2519378. In the current example it is assumed that *N_{P}* = 5 (i.e. *k* = 1, ... ,5) reference vectors are used and the reference vectors *a̅ₖ* are determined by one of the standard approaches from literature as described in, for example, "A Reference Vector Guided Evolutionary Algorithm for Many-Objective Optimization", IEEE Transactions on Evolutionary Computation 20(5), 773-791 (2016) doi 10.1109/TEVC.2016.2519378, or ".Adaptation of Reference Vectors for Evolutionary Many-objective Optimization of Problems with Irregular Pareto Fronts", IEEE Congress on Evolutionary Computation (CEC), 1726-1733 (2019) doi
10.1109/CEC.2019.8790214.

In a simple but representative case the quantum circuit has only one layer, *N_{L}* = 1, in which case the quantum circuit prepares the following state, $\left|ψ\left({\left\{{γ}_{X ; k}, {γ}_{P ; k}\right\}}_{k = 1}^{{N}_{P} = 5}\right)\right〉 = {\prod }_{k = 1}^{5} {e}^{- i {\sum }_{s = 1}^{{N}_{T}} {\sum }_{n = 1}^{{N}_{EV}} {γ}_{X ; k , n , s} {L}_{x ; n , s}} {e}^{- {iγ}_{P ; k} {\sum }_{α = 1}^{4} {a}_{k , α} {H}_{α}} \left|{ψ}_{0}\right〉$ *(PQCEX)*
with the reference vectors *a_{k,α}* and the cost Hamiltonians of *(HAM1)* - *(HAM4).* This parametrized quantum state depends on 5(*N_{T}N_{EV}* + 1) parameters ${\left\{{\left\{{γ}_{X ; k . n . s}\right\}}_{n , s}^{{N}_{EV} , {N}_{T}}, {γ}_{P ; k}\right\}}_{k = 1}^{{N}_{P} = 5}$ which need to be optimally determined by a classical optimization algorithm.

The claimed method executed on the claimed hybrid quantum-classical computer system comprises the following steps. A classical optimization algorithm 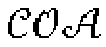 such as a stochastic gradient descent (SGD) is initiated on the classical computing component. The search parameters of this classical optimizer are given by the 10 parameters of the PQC, i.e., $γ = {\left\{{\left\{{γ}_{X ; k . n . s}\right\}}_{n , s}^{{N}_{EV} , {N}_{T}}, {γ}_{P ; k}\right\}}_{k = 1}^{{N}_{P} = 5} ∈ {ℝ}^{D}$ with D = 5(*N_{T}N_{EV}* + 1).

Additionally, an archive 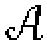 may be initiated on the classical computing component where search parameters, candidate solutions and corresponding values of the objective functions will be stored. Further, the quantum apparatus is configured such that the measurement basis represents classical solutions as depicted in *(ENC)* and the quantum circuit produces the parametrized quantum state *(PQCEX)* with the corresponding gate operations *(MIXEX)* and *(PQCEX)* and *(HAM1)* - *(HAM4).* Then, an iteration counter is initialized with t = 0 and the following steps are iterated:
i) Based on its internal state, the classical optimizer algorithm generates a set of search parameter values, $COA \to {γ}^{t} = {\left\{{\left\{{γ}_{X ; k . n . s}^{t}\right\}}_{n , s}^{{N}_{EV} , {N}_{T}}, {γ}_{P ; k}^{t}\right\}}_{k = 1}^{{N}_{P} = 5}$ and the classical computing components sends these parameter values to the quantum apparatus.
ii) The quantum apparatus receives the parameter set ${γ}^{t} = {\left\{{\left\{{γ}_{X ; k , n , s}^{t}\right\}}_{n , s}^{{N}_{EV} , {N}_{T}}, {γ}_{P ; k}^{t}\right\}}_{k = 1}^{{N}_{P} = 5}$ from the classical computing component and adjusts its unitary gate operators such that it produces the quantum state specified by *(PQCEX),* i.e. $\left|ψ\left({γ}^{t}\right)\right〉 = {\prod }_{k = 1}^{{N}_{P} = 5} {e}^{- i {\sum }_{s = 1}^{{N}_{T}} {\sum }_{n = 1}^{{N}_{EV}} {γ}_{X ; k , n , s}^{t} {L}_{x ; n , s}} {e}^{- {iγ}_{P ; k}^{t} {\sum }_{α = 1}^{4} {a}_{k , α} {H}_{α}} \left|{ψ}_{0}\right〉 ,$ when it is executed.

Then the quantum apparatus executes the quantum circuit. The one resulting quantum state |Ψ(γ^{t})〉 then encodes a whole population of *N_{S}* candidate solutions as superposition, $\left|ψ\left({γ}^{t}\right)\right〉 = {\sum }_{i = 1}^{{N}_{S}} {ξ}_{i} \left({γ}^{t}\right) \left|{x}_{i}\right〉 + {\sum }_{j = {N}_{S} + 1}^{{d}_{H}} {δ}_{j} \left({γ}^{t}\right) \left|{x}_{j}\right〉$ where the first sum are those basis states with large weights and which represents the full population, $S = {\left\{{x}_{i}\right\}}_{i = 1}^{{N}_{S}}$, and the second sum is negligibly small, i.e. ${\sum }_{i = 1}^{{N}_{S}} {\left|{ξ}_{i}\left({γ}^{t}\right)\right|}^{2} = 1 - ϵ$ and ${\sum }_{j = {N}_{S} + 1}^{{d}_{H}} {\left|{δ}_{j}\left({γ}^{t}\right)\right|}^{2} = ϵ$ with *ε* much smaller than 1, respectively, such that the final state truly encodes the solution population, $\left|ψ\left({γ}^{t}\right)\right〉 \approx {\sum }_{i = 1}^{{N}_{S}} {ξ}_{i} \left({γ}^{t}\right) \left|{x}_{i}\right〉 ,$

The set of *N_{S}* solutions ${S}_{t}$ at iteration t, is extracted from one quantum state as those *N_{S}* basis states which have the largest amplitudes.

One way to extract those solutions from the quantum state practically is through repeated sampling. There, the quantum state is prepared and measured with the same parameters *γ^{t}* a plurality of times (i.e., *Nₘₑₐₛᵤᵣₑ > N_{S}*), where each measurement results in one basis state, i.e., one solution, $\left|ψ\left({γ}^{t}\right)\right〉 {⇒}^{measurement # m} \left|{x}_{m}\right〉 {⇒}^{readout} {x}_{m}$ and collecting the measurement results in a list, from which the *N_{S}* most frequent measurement results are then selected. For large enough number of measurements, this sampling procedure indeed selects those basis states with the largest amplitudes, as each individual measurement selects a basis state according to the standard Born-rule probability,
Probability of measuring |x〉: *P*(x,*γ^{t}*) = |〈x|*ψ*(*γ^{t}*)〉|².

Another way is to perform a full state tomography protocol (see e.g. "Efficient quantum state tomography" Nat Commun 1, 149 (2010), doi 10.1038/ncomms1147, or "Predicting many properties of a quantum system from very few measurements", Nat. Phys. 16, 1050-1057 (2020). https://doi.org/10.1038/s41567-020-0932-7) and explicitly selecting the basis states with the largest probabilities.

In any case, the procedure is such that the quantum computing component extracts a whole population ${S}_{t} = {\left\{{x}_{m}\right\}}_{m = 1}^{{N}_{S}}$ of solutions from the one quantum state |ψ(γ^{t})〉 and then sends it to the classical computing apparatus for further processing.

iii) The classical computing component receives the population of solutions ${S}_{t} = {\left\{{x}_{m}\right\}}_{m = 1}^{{N}_{S}}$ from the quantum computing component and stores it for further processing in an archive 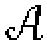 *.* Then, all objective function values from equations *(OBJ1)* to *(OBJ4)* are computed for each of the solutions in the population, which results in a set of objective value vectors ${O}_{t} = \left\{\vec{C}\left({x}_{m}\right)∀{x}_{m}∈{S}_{t}\right\}$. From this set of objective value vectors, the set of non-dominated solutions are selected, $ℙ {F}_{t} = {\left\{\vec{C}\left({x}_{i}\right)\right\}}_{i = 1}^{{N}_{PF}}$. This represents the approximation of the Pareto front at iteration t and the corresponding set of solutions is an estimate of the Pareto set $ℙ {S}_{t} = {\left\{{x}_{i}\right\}}_{i = 1}^{{N}_{PF}}$.

Form this set of nondominated solutions, the hypervolume indicator $HV \left(ℙ{F}_{t}\right)$ is calculated, which in turn is used to calculate the fitness value *f* associated with the parameters of the PQC, ${f}_{t} ≡ f \left({γ}^{t}\right) = - HV \left(ℙ{F}_{t}\right) .$

The fitness value *fₜ* is then fed back into the classical optimization algorithm $COA ← f \left({γ}^{t}\right)$ and the optimizer updates its internal state accordingly.

Additionally, the search parameters *γ^{t},* the corresponding fitness value *f*(*γ^{t}*), the current estimate of the Pareto front $ℙ {F}_{t}$, and the corresponding Pareto set of candidate solutions $ℙ {S}_{t}$, are added to the archive, $A \to A + \left\{t,{γ}^{t},f\left({γ}^{t}\right),ℙ{S}_{t},ℙ{F}_{t}\right\}$

iv) Thereafter, a convergence criterion is checked on the classical computing component. This can be, for example, whether the maximally allowed number of cost function evaluations has been reached, or if the improvement of the fitness value *f*(*γ^{t}*) over the last couple of iterations was not enough compared to a given threshold.
a. If the convergence criterion is met the optimization is stopped and as the final result the final Pareto front and corresponding Pareto set are obtained by selecting all the non-dominated solutions from all approximations of the Pareto front of each iteration $ℙ {F}_{Final} = NonDominatedSolutions \left({\left\{ℙ{F}_{t ′}\right\}}_{t ′ = 1}^{t}\right)$.
b. If the convergence criterion is not met, the process is repeated from step i). above.

The final result is the Pareto set of solutions $ℙ {S}_{Final} = {\left\{{x}_{i}\right\}}_{i = 1}^{{N}_{PF}}$ which approximate the Pareto front $ℙ {F}_{Final} = {\left\{\vec{C}\left({x}_{i}\right)\right\}}_{i = 1}^{{N}_{PF}}$, which is output for further evaluation or control of a charging system.

The proposed method and hybrid computer system utilizing the PQC is effective in producing a good approximations to the Pareto front since all possible solutions are typically present in the superposition of the initial state of the quantum apparatus. The phase operators in the PQC do assign different phases to each individual basis state based on the values of the reference vectors used in the phase operators of Eq. (*PQCEX*)*.* In that way, the classical optimizer can tune the parameters of the PQC to give the largest diversity and include mostly non-dominated solutions in the quantum state which maximize hypervolume indicator.

The set of Pareto optimal solutions serves as a basis for implementing an efficient control of the EV charging and scheduling service. A solution selection routine can be implemented, where the best fitting solutions are automatically determined from the whole set of Pareto optimal solutions. The natural solution selection routine is to utilize state of the art knee point detection methods as, for example, described in "Performance Analysis on Knee Point Selection Methods for Multi-Objective Sparse Optimization Problems", IEEE Congress on Evolutionary Computation, 1-8 (2018) doi 10.1109/CEC.2018.8477915 or "A Multi-objective Evolutionary Algorithm for "Finding Knee Regions Using Two Localized Dominance Relationships", IEEE Transactions on Evolutionary Computation 25(1), 145-158 (2021) doi 10.1109/TEVC.2020.3008877. Knee-points naturally provide the preferred best tradeoff solutions.

The second application example regards a Markowitz portfolio optimization. The target of Markowitz portfolio optimization is to manage a portfolio of financial assets over a period of time such that the expected return is maximized, while at the same time the risk is minimized( see e.g., "Computational aspects of alternative portfolio selection models in the presence of discrete asset choice constraints", Quantitative finance 1(5), 489-501 (2001), "Solving the Optimal Trading Trajectory Problem Using a Quantum Annealer", IEEE Journal of Selected Topics in Signal Processing 10(6), 1053-1060, (2016) doi 10.1109/JSTSP.2016.2574703, or "Dynamic portfolio optimization with real datasets using quantum processors and quantum-inspired tensor networks" Phys. Rev. Research 4, 013006 (2022) for recent introductions). As these two objectives are usually in a tradeoff relation, it is desired to map the efficient frontier, i.e., the Pareto front of best possible tradeoff solutions.

Technically the problem consists of determining the compositions of a portfolio of financial assets as specified by the share *ω_{n,s}* of asset n, with *n* = 1, ... *, N_{Asset}* at time s with s = 1, ..., *N_{T}* for a fixed time window. Usually rebalancing, i.e., changing the portfolio composition is done a fixed predefined times which leads to these discretized time steps. Additionally, it is common for funds to trade assets in discrete junks, which leads to the shares *ω_{n,s}* to be representable by integer variables, i.e. *ω_{n,s}* ∈ [0, *... , L* - 1].

The two objectives of this problem are formulated as ${C}_{1} \left(ω\right) = {\sum }_{s = 1}^{{N}_{T}} {\sum }_{n = 1}^{{N}_{Asset}} \left[{μ}_{n , s}{ω}_{n , s}-{ν}_{n , s}\left|{ω}_{n , s + 1}-{ω}_{n , s}\right|\right] \left(OBJ1, Expected return\right)$ ${C}_{2} \left(ω\right) = {\sum }_{s = 1}^{{N}_{T}} {\sum }_{n = 1}^{{N}_{Asset}} {ω}_{n , s} {Σ}_{nm , s} {ω}_{m , s} \left(OBJ2, Risk\right)$

Here *µ_{n,s}* is the forecasted return on asset n at time s and *ν_{n,s}* is the transaction cost when changing the share of asset n from time step s - 1 to time step s in the portfolio.

The first term thus gives the accumulated overall expected return for the complete portfolio over the considered time horizon.

In the second objective Σ*_{nm,s}* denotes the covariance of assets n and m at time s and the objective represents the covariance of the expected portfolio return summed over all times. This gives a measure for risk since (a) large covariance implies that the true return can differ largely form the expected returns, while small covariance implies the true return is similar to the expected return, and (b) large covariance between two assets implies correlations between the assets which in-turn reduces the robustness of the portfolio and thus makes the portfolio more risky.

The two-objective portfolio optimization problem is approached with the proposed method and hybrid quantum-classical computing system by representing the integer variables describing the shares in the portfolios, *ω_{n,s}*, as the measurement basis states of the quantum apparatus, $\left|x\right〉 = \left|{ω}_{1 , 1},{ω}_{2 , 1},…{ω}_{{N}_{Assets} , 1},{ω}_{1 , 2},…,{ω}_{n , s},…,{ω}_{{N}_{Assets} , {N}_{T}}\right〉 \left(ENC\right)$ and formulating the two cost Hamiltonians in terms of the z -angular momentum operator *L*_{*z*;*n,s*} of the qudit encoding the corresponding variable, i.e. be using the replacement rule ${ω}_{n , s} \to {L}_{z ; n , s} + \frac{L - 1}{2}$. The measurement basis states are eigenstates to these operators and the eigenvalues are the shares of the asset in the portfolio, i.e. $\begin{matrix}\left({L}_{z ; n , s}+\frac{L - 1}{2}\right) \left|{ω}_{1 , 1},{ω}_{2 , 1},…,{ω}_{{N}_{Assets} , 1},{ω}_{1 , 2},…,{ω}_{n , s},…,{ω}_{{N}_{Assets} , {N}_{T}}\right〉 \\ = {ω}_{n , s} \left|{ω}_{1 , 1},{ω}_{2 , 1},…{ω}_{{N}_{Assets} , 1},{ω}_{1 , 2},…,{ω}_{n , s},…,{ω}_{{N}_{Assets} , {N}_{T}}\right〉 .\end{matrix}$

With this, the cost Hamiltonians are written as ${H}_{1} = {\sum }_{s = 1}^{{N}_{T}} {\sum }_{n = 1}^{{N}_{Asset}} \left[{μ}_{n , s}\left({L}_{z ; n , s}+\frac{L - 1}{2}\right)-{ν}_{n , s}\left|{L}_{z ; n , s + 1}-{L}_{z ; n , s}\right|\right] \left(HAM1\right)$ ${H}_{2} = {\sum }_{s = 1}^{{N}_{T}} {\sum }_{n = 1}^{{N}_{Asset}} \left({L}_{z ; n , s}+\frac{L - 1}{2}\right) {Σ}_{nm , s} \left({L}_{z ; m , s}+\frac{L - 1}{2}\right) \left(HAM2\right) .$

The measurement basis states are also simultaneous eigenstates of these cost Hamiltonians and the eigenvalues are given by the value of the objective functions of the corresponding configuration, $\begin{matrix}{H}_{α} \left|{ω}_{1 , 1},…,{ω}_{n , s},…,{ω}_{{N}_{Assets} , {N}_{T}}\right〉 \\ = {C}_{α} \left({ω}_{1 , 1},…,{ω}_{n , s},…,{ω}_{{N}_{Assets} , {N}_{T}}\right) \left|{ω}_{1 , 1},…,{ω}_{n , s},…,{ω}_{{N}_{Assets} , {N}_{T}}\right〉 .\end{matrix}$

In this example, the quantum computing component which executes the parametrized quantum circuit PQC, prepares a state using two layers, $\left|ψ\right〉 = U \left({γ}_{2}\right) U \left({γ}_{1}\right) \left|{ψ}_{0}\right〉 \left(PQC\right)$ where the unitary operations *U* are freely parametrizable with a set of parameters y *=* {*γ*₁,*γ*₂}*.* The initial state of the circuit is given by the equal superposition of all possible states, $\left|{ψ}_{0}\right〉 = \frac{1}{\sqrt{{d}_{H}}} {\sum }_{x} \left|x\right〉 ,$ where *d_{H}* = *L^{N^{Assets} N^{T}}* is the dimensionality of the Hilbert space for *N_{Assets}* assets, *N_{T}* time slots and where the share of each asset can bet between zero and L - 1, which are encoded by *N_{Assets}* · *N_{T}* qudits with local dimension L. In the current example, the unitary operation in each layer *l* = 1, 2 has the form $U \left({γ}_{l}\right) = {\prod }_{α = 1}^{2} {e}^{- {iγ}_{X ; l , α} x} {e}^{- {iγ}_{H ; l , α} {H}_{α}}$ which is a product over two different terms and each product term consists of a so-called mixing term ~ *e*^{*-i γ^{X}*;*l,α X*} and a phase operator ~ 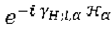 *.*

The mixing unitary has freely choosable parameters ${γ}_{X ; l , α} ∈ ℝ$ and it is generated by the Hermitian mixing operator X. The mixing operators in this example is given by the sum over all *x-*angular momentum operators of each qudit, i.e., $X = {\sum }_{s = 1}^{{N}_{T}} {\sum }_{n = 1}^{{N}_{Assets}} {L}_{x ; n , s} ,$ (*MIXEX*)
where *L*_{*x*;*n,s*} is the usual x-angular momentum operator of the qudit encoding share of asset *n* at time slot s. The action of *L*_{*x*;*n,s*} is given by the standard action of angular momentum operators, $\begin{matrix}{L}_{x ; n , s} \left|{ω}_{1 , 1},…,{ω}_{n , s},…,{ω}_{{N}_{Assets} , {N}_{T}}\right〉 \\ = \frac{1}{2} \sqrt{\left(L-{ω}_{n , s}-2\right) \left({ω}_{n , s}+2\right)} \left|{ω}_{1 , 1},…,{ω}_{n , s},…,{ω}_{{N}_{Assets} , {N}_{T}}\right〉 \\ + \frac{1}{2} \sqrt{\left(L-{ω}_{n , s}\right) {ω}_{n , s}} \left|{ω}_{1 , 1},…,{ω}_{n , s},…,{ω}_{{N}_{Assets} , {N}_{T}}\right〉\end{matrix}$ and as such generates transitions between and creates superpositions of basis states, i.e., different solutions.

Each of the two phase terms in each layer comes with one freely chooseable parameter, ${γ}_{H ; l , α} ∈ ℝ$ and each term is generated by one cost Hamiltonians of *(HAM1)* and (*HAM*2)*.*

Putting it all together, the quantum circuit prepares the following state, $\left|ψ\left({\left\{{γ}_{X ; l , 1}, {γ}_{H ; l , 1}, {γ}_{X ; l , 2}, {γ}_{H ; l , 2}\right\}}_{l = 1}^{2}\right)\right〉 = {\prod }_{l = 1}^{2} {e}^{- {iγ}_{X ; l , 2} X} {e}^{- {iγ}_{H ; l , 2} {H}_{2}} {e}^{- {iγ}_{X ; l , 1} X} {e}^{- {iγ}_{H ; l , 1} {H}_{1}} \left|{ψ}_{0}\right〉$ *(PQCEX)*

This parametrized quantum state depends on 8 parameters ${\left\{{γ}_{X ; l , 1}, {γ}_{H ; l , 1}, {γ}_{X ; l , 2}, {γ}_{H ; l , 2}\right\}}_{l = 1}^{2}$ which need to be optimally determined by a classical optimization algorithm.

The proposed method and apparatus executes the following steps:

First, a classical optimization algorithm 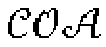 such as a stochastic gradient descent SGD is initiated on the classical computing component. The search parameters of this classical optimizer are given by the 8 parameters of the PQC, i.e., $γ = {\left\{{γ}_{X ; l , 1}, {γ}_{H , l , 1}, {γ}_{X ; l , 2}, {γ}_{H ; l , 2}\right\}}_{l = 1}^{2} ∈ {ℝ}^{D}$ with D = 8. Additionally, an archive 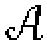 is initiated on the classical computing component, where search parameters, candidate solutions and corresponding values of the objective functions will be stored.

Second, the quantum computing component is configured such that the measurement basis represents classical solutions as depicted in *(ENC)* and the quantum computing component produces the parametrized quantum state *(PQCEX)* with the corresponding gate operations *(MIXEX)* and *(PQCEX)* with *(HAM1)* and (*HAM*2)*.* Then, an iteration counter is initialized with t = 0 and the following steps are iterated:
i) Based on its internal state, the classical optimizer algorithm generates a set of search parameter values, $COA \to {γ}^{t} = {\left\{{γ}_{X ; l , 1}^{t}, {γ}_{H ; l , 1}^{t}, {γ}_{X ; l , 2}^{t}, {γ}_{H ; l , 2}^{t}\right\}}_{l = 1}^{2}$ and the classical computing component sends these parameter values to the quantum computing component.
ii) The quantum computing component receives the parameter set ${γ}^{t} = {\left\{{γ}_{X ; l , 1}^{t}, {γ}_{H ; l , 1}^{t}, {γ}_{X ; l , 2}^{t}, {γ}_{H ; l , 2}^{t}\right\}}_{l = 1}^{2}$ and adjusts its unitary gate operators such that it produces the quantum state specified by (*PQCEX*), i.e. $\left|ψ\left({γ}^{t}\right)\right〉 = {\prod }_{l = 1}^{2} {e}^{- i {{γ}^{t}}_{X ; l , 2} X} {e}^{- i {{γ}^{t}}_{H ; l , 2} {H}_{2}} {e}^{- i {{γ}^{t}}_{X ; l , 1} X} {e}^{- i {{γ}^{t}}_{H ; l , 1} {H}_{1}} \left|{ψ}_{0}\right〉 ,$ when it is executed.

Then the quantum apparatus executes the quantum circuit. The one resulting quantum state |*Ψ*(*γ^{t}*)〉 then encodes a whole population of *N_{S}* candidate solutions as superposition, $\left|ψ\left({γ}^{t}\right)\right〉 = {\sum }_{m = 1} {ξ}_{t} \left({x}_{m}\right) \left|{x}_{m}\right〉 .$

For this state a full state tomograph is done on the quantum device (see e.g. "Efficient quantum state tomography", Nat Commun 1, 149 (2010) doi 10.1038/ncomms1147), which gives the list of all weights contributing to the state, T = {|*ξₜ*(x*_{c}*)|² for *c* in 1, ... *d_{H}*} and the set of *N_{S}* solutions ${S}_{t}$ at iteration t is extracted from this by selecting the ones which have the largest amplitudes, ${S}_{t} = {\left\{{x}_{m}\right\}}_{m = 1}^{{N}_{S}}$ where *xₘ* correspond to the largest *N_{S}* entries in the tomography list T.

iii) The classical computing component receives the population of solutions ${S}_{t} = {\left\{{x}_{m}\right\}}_{m = 1}^{{N}_{S}}$ from the quantum computing component and stores it for further processing in the archive. Then, all objective function values from equations *(OBJ1)* and *(OBJ2)* are computed for each of the solutions in the population, which results in a set of objective value vectors ${O}_{t} = \left\{\vec{C}\left({x}_{m}\right) ∀ {x}_{m}∈{S}_{t}\right\} .$

From this set of objective value vectors, the set of non-dominated solutions $ℙ {F}_{t} = {\left\{\vec{C}\left({x}_{i}\right)\right\}}_{i = 1}^{{N}_{PF}}$ are selected. This represents the approximation of the Pareto front $ℙ {F}_{t}$ at iteration t and the corresponding set of solutions is an estimate of the Pareto set $ℙ {S}_{t} = {\left\{{x}_{i}\right\}}_{i = 1}^{{N}_{PF}}$. Form this set of nondominated solutions, the hypervolume indicator $HV \left(ℙ{F}_{t}\right)$ is calculated, which in turn is used to calculate the fitness value *fₜ* associated with the parameters of the PQC, ${f}_{t} ≡ f \left({γ}^{t}\right) = - HV \left(ℙ{F}_{t}\right) .$

The fitness value is then fed back into the classical optimization algorithm $COA ← f \left({γ}^{t}\right)$ and the optimizer updates its internal state accordingly.

Additionally, the search parameters *γ^{t}*, the corresponding fitness value *f*(*γ^{t}*), the current estimate of the Pareto front $ℙ {F}_{t}$, and the corresponding Pareto set of candidate solutions $ℙ {S}_{t}$, are added to the archive, $A \to A + \left\{t,{γ}^{t},f\left({γ}^{t}\right),ℙ{S}_{t},ℙ{F}_{t}\right\}$

iv) Thereafter, a convergence criterion is checked on the classical computation apparatus. This can be, for example, whether the maximally allowed number of cost function evaluations has been reached, or if the improvement of the fitness value *fₜ* over the last couple of iterations was not enough.
a. If the convergence criterion is met the optimization is stopped and as the final result the final Pareto front and corresponding Pareto set are obtained by selecting all the non-dominated solutions from all approximations of the Pareto front of each iteration, $ℙ {E}_{Final} = NonDominatedSolutions \left({\left\{ℙ{F}_{t ′}\right\}}_{t ′ = 1}^{t}\right)$*.*
b. If the convergence criterion is not met, the process is repeated from step 1. above.

The final result is the Pareto set of solutions $ℙ {S}_{Final} = {\left\{{x}_{i}\right\}}_{i = 1}^{{N}_{PF}}$ which approximate the Pareto front $ℙ {F}_{Final} = {\left\{\vec{C}\left({x}_{i}\right)\right\}}_{i = 1}^{{N}_{PF}}$, which is then output and visualized. The Pareto front and the corresponding Pareto set form the basis for a financial service company to offer their customers various different portfolios as products. Each portfolio represents an optimal tradeoff solution between expected risk and expected return, and being able to offer solutions from all parts of the complete Pareto front as products to their customer give the financial service company a great benefit.

The proposed method and hybrid quantum-classical computer system utilizing the PQC is effective in producing a good approximations to the Pareto front since all possible solutions are typically present in the superposition of the initial state of the quantum apparatus. The phase operators in the PQC do assign different phases to each individual basis state based on the values of the scalarizing functions uses in the phase operators of Eq. *(PQ CEX).* In that way, the classical optimizer can tune the parameters of the PQC to give the largest diversity and include mostly non-dominated solutions in the quantum state, which maximize hypervolume indicator.

## Claims

1. A computer implemented method for obtaining a set PS of N_{PF} Pareto-optimal solutions to a given multi-objective optimization problem with *M* different objectives $\vec{C} \left(x\right) = {\left\{{C}_{α}\right\}}_{α = 1}^{M} = {\left({C}_{1}\left(x\right), {C}_{2}\left(x\right),…, {C}_{M}\left(x\right)\right)}^{T}$ where x represents a classical solution of the multi-objective optimization problem, comprising performing an iterative procedure wherein each iteration t comprises the following steps:
a. Generating, for iteration t, a set of parameters *γₜ* on a classical computation component using a classical optimization algorithm and sending it to a quantum component,
b. on the quantum component, which is a quantum computing device, generating a quantum state |*ψ_{γₜ}*〉 = *U*(*γₜ*)|*ψ*₀〉 by executing a parameterized quantum circuit (PQC) implementing a unitary quantum operation U(γ) with the set of parameters γ = *γₜ* on initial quantum state |*ψ*ₒ〉, where the quantum state |*ψ_{γₜ}*〉 represents a set of *N_{S}* different solutions,
c. on the quantum component, selecting a set of *N_{S}* ≥ *N_{PF}* basis states ${\left\{\left|{x}_{i}\right〉\right\}}_{i = 1}^{{N}_{S}}$ from the one quantum state |*ψ_{γₜ}*〉 and sending the information of which basis states were selected to the classical computation component,
wherein the basis-state selection is performed by sampling from the quantum state |*ψ_{γₜ}*〉 which is realized by measuring repeatedly the quantum state, and adding for each measured state |x*ₘ*〉 the corresponding classical solution x*ₘ* to the set of selected states until *N_{S}* different states have been measured and added to the set of selected states, ${S}_{t} = {\left\{{x}_{i}\right\}}_{i = 1}^{{N}_{S}}$, or wherein the basis-state selection is performed by a full state tomography from the quantum state |*ψ_{γₜ}*〉 where the set of weights of each basis state is determined, $T = {\left\{{\left|{ξ}_{i}\right|}^{2}\right\}}_{i = 1}^{{d}_{H}}$ with *d_{H}* being the dimensionality of the Hilbert space, and the basis states corresponding to the subset of the *N_{S}* largest weights is selected, which form the set of selected states, ${S}_{t} = {\left\{{x}_{i}\right\}}_{i = 1}^{{N}_{S}}$.
d. on the classical computation component calculating a set of objective values consisting of the objective values for each solution in the set of classical solutions,
e. generating a new estimate for the Pareto set PSₜ of solutions and the corresponding Pareto front PFₜ by the classical computation component using the classical optimization algorithm incorporating the set of solutions and the corresponding set of objectives values,
f. updating the internal state of the classical optimization algorithm based on the current set of solutions and the Pareto set PSₜ and their corresponding sets of objective values,
g. checking a convergence criterion and if the convergence criterion is not satisfied, repeating the process from step a. onwards, until the convergence criterion is fulfilled,
taking the results for the Pareto set PSₜ and corresponding Pareto front PFₜ after the latest iteration t have been completed as a set PS of N_{PF} Pareto-optimal solutions, for which the corresponding set of objective value vectors is an approximation to the true Pareto front PF.

2. The method according to claim 1, wherein
in addition to updating the internal state of the classical optimization algorithm, an archive is updated based on the current set of solutions and the Pareto set PSₜ and their corresponding sets of objective values, and the step of generating the new estimate further incorporates values from previous iterations retrieved from an archive.

3. The method according to claim 1 or 2, wherein
the parameterized quantum circuit PQC implements the unitary quantum operation *U(y)* which is composed of *N_{L}* layers with different choosable sets of parameters as $U \left(γ\right) = {\prod }_{l = 1}^{{N}_{L}} {U}_{l} \left({γ}_{l}\right)$
and where each layer *l* comprises multiple mixing and phase operators with separately choosable parameter sets *γₗ* = {γ_{*X*;}*_{l,}γ*_{*P*;*l*}}, and the unitaries in each layer have the form ${U}_{l} \left({γ}_{l}\right) = {\prod }_{α = 1}^{M} {e}^{- i {X}_{α} \left({γ}_{X ; l , α}\right)} {e}^{- i {γ}_{H ; l , α} {H}_{α}}$
where the phase unitaries in each layer, 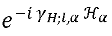 , have freely choosable parameters ${γ}_{H ; l , α} ∈ ℝ$ and are generated by cost Hamiltonians 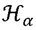 with *α =* 1, ..., M, where each cost Hamiltonian 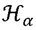 represents one classical objective function *C_{α}*, in the sense that the measurement basis states |x〉 are simultaneous eigenstates of all problem Hamiltonians and the eigenvalues of the problem Hamiltonians are given by the value of the corresponding classical objective function of the corresponding classical solutions, x,
and where the mixing unitaries in each layer, *e^{-i Xα}*(*γ^{X}*;*l,α*), have freely choosable parameters *γ*_{*X*;*l,α*} and are generated by *M* parametrized mixing operators *X_{α}*( *γ*_{*X*;*l,α*}) with *α* = 1, ..., M, where the mixing operators do not commute with the cost Hamiltonians.

4. The method of claim 1 or 2, wherein
the parameterized quantum circuit PQC implements the unitary quantum operation *U(y)* which is composed of *N_{L}* layers with different choosable sets of parameters as $U \left(γ\right) = {\prod }_{l = 1}^{{N}_{L}} {U}_{l} \left({γ}_{l}\right)$
and where each layer *l* comprises multiple mixing and phase operators with separately choosable parameter sets *γₗ* ∈ {*γ*_{*X*;}*_{l,}γ_{P;l}*}, and which have the form ${U}_{l} \left({γ}_{l}\right) = {\prod }_{k = 1}^{{N}_{P}} {e}^{- i {X}_{k} \left({γ}_{X ; l , k}\right)} {e}^{- {iγ}_{P ; l , k} {P}_{k}}$
where the phase unitaries in each layer ,*e^{-i γP}*;*l,k ^{P^{k}},* have freely choosable parameters ${γ}_{P ; l , k} ∈ ℝ$ and are generated by specific sums over the cost Hamiltonians 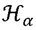
${P}_{k} = {\sum }_{α = 1}^{M} {a}_{k , α} {H}_{α}$, where each cost Hamiltonian 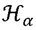 represents one classical objective function *C_{α}*, in the sense that the measurement basis states |x〉 are simultaneous eigenstates of all cost Hamiltonians and the eigenvalues of the problem Hamiltonians are given the value of the corresponding classical objective function of the corresponding classical solutions, x,
where the mixing unitaries in each layer, *e^{-i Xk}*(*γ^{X}*;*l,k*), have freely choosable parameters *γ*_{*X*;*l,k*} and are generated by *M* parametrized mixing operators *Xₖ*(γ_{*X*;*l*,*k*}) with k= 1, *N_{P}*, where the mixing operators do not commute with the cost Hamiltonians,
wherein the coefficients in these sums ${a}_{k , α} ∈ ℝ$ represent reference vectors *a̅ₖ* which have to fulfill ${\sum }_{α} {a}_{k , α}^{2} = {\vec{a}}_{k}^{T} ⋅ {\vec{a}}_{k} = 1$ and *a_{k,n}* ≥ 0 for each k, and for each k, define a certain direction in the space of objective values and thus reflect one user preference and are determined in the beginning as part of the problem definition, ${H}_{α} {C}_{α} \left|x\right〉 x {e}^{- i {X}_{k} \left({γ}_{X ; l , k}\right)} {γ}_{X ; l , k} {MX}_{α} \left({γ}_{X ; l , k}\right) = 1 , … , {N}_{P} .$

5. The method according to claim 1 or 2, wherein
the parameterized quantum circuit PQC implements the unitary quantum operation *U(y)* which is composed of N_{L} layers with different choosable sets of parameters as $U \left(γ\right) = {\prod }_{l = 1}^{{N}_{L}} {U}_{l} \left({γ}_{l}\right)$
and where each layer *l* comprises multiple mixing and phase operators with separately choosable parameter sets *yₗ* E {*γ*_{*X*;}*ₗ, γ*_{*V*;*l*}}, and which have the form ${U}_{l} \left({γ}_{l}\right) = {e}^{- i {X}_{l} \left({γ}_{X ; l}\right)} {e}^{- i {γ}_{V ; l} V}$
where the phase unitaries in each layer, *e^{-i γV}*;*l V*, have freely choosable parameters ${γ}_{V ; l} ∈ ℝ$ and are generated by an operator V which estimates the hypervolume in objective space which is spanned by a population of states as it is encoded by a quantum superposition of states where the function $HV \left({\left\{\vec{C}\left({x}_{i}\right)\right\}}_{i}^{{N}_{S}}\right)$ gives the hypervolume, which is spanned by the objective value vectors $\vec{C} \left({x}_{i}\right) = {\left\{{C}_{α}\left({x}_{i}\right)\right\}}_{α = 1}^{M}$ of the set of solutions ${\left\{{x}_{i}\right\}}_{i = 1}^{{N}_{S}}$ and the function $hs \left({\left\{{ξ}_{i}\right\}}_{i = 1}^{{N}_{S}}\right)$ has function values between zero and one and allows for a down-scaling of the hypervolume of a particular set of solutions in case the individual amplitudes of some of the contributing states are smaller than a threshold or an inhomogeneity of a distribution of the amplitudes exceeds a threshold,
and where each cost Hamiltonian 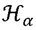 represents one classical objective function *C_{α}*, in the sense that the measurement basis states |x〉 are simultaneous eigenstates of all cost Hamiltonians and the eigenvalues of the problem Hamiltonians are given the value of the corresponding classical objective function of the corresponding classical solutions, x,
and where the mixing unitaries in each layer, *e^{-i Xl}*(*γ^{X}*;*l*), have at least one freely choosable parameter *γ*_{*X*;*l*} and are generated by the parametrized mixing operators *Xₗ*(*γ*_{*X*;*l*}), where the mixing operators do not commute with the cost Hamiltonians.

6. The method according to any of claims 3 to 5, wherein
each of the mixing operators in each layer is given by a sum over all x-angular momentum operators or generalized Pauli X-operators of each physical qudit and where the coefficient of each individual angular momentum operator in each layer is given by one freely choosable parameter ${γ}_{X ; k / α , l , i} ∈ ℝ$, where *k*/*α* enumerates the mixing operators, *l* denotes the layers and *i* enumerates all physical qudits.

7. The method according to any of claims 3 to 6, wherein
each of the mixing operators in each layer is given by a sum over all x-angular momentum operators or generalized Pauli X-operators of each physical qudit and where there is only one global coefficient for the complete sum over all individual angular momentum or generalized Pauli X operators applied to each physical qudit in each layer which is given by the freely choosable parameter ${γ}_{X ; k / α , l} ∈ ℝ$ where *k*/*α* enumerates the mixing operators, and *l* denotes the layers.

8. The method according to claim **4,** wherein
the coefficients *a_{k,α}* of the reference vectors of the phase Hamiltonians, ${P}_{k} = {\sum }_{α = 1}^{M} {a}_{k , α} {H}_{α}$, are determined and adapted in each iteration step t according to the state of the art procedure for reference vector adaptation such that in each iteration a different set of reference vectors is used which allows a speed-up of the optimization process and a diversification of the obtained Pareto solutions.

9. The method according to any of claims 1 to 8, wherein
the problem is a multi-objective bi-directional electric vehicle charging problem where the target is to find a set of Pareto optimal configurations of discrete integer variables, which encode a full charging and service schedule for a fleet of electric vehicles and where multiple objectives, which are at least two of electricity cost for fulfilling all charging demands, customer satisfaction, maximizing utilization of renewable energies, minimizing electricity drawn from the grid, and minimizing the peak electricity power consumption, are considered for achieving an approximation of the Pareto front, $ℙ F$ is obtained.

10. The method according to any of claims 1 to 8, wherein
the method is applied to obtain the efficient frontier of possible portfolio compositions as formulated by the Markowitz model of Modern portfolio theory by finding the compositions of a portfolio over time as specified by integer variables which specify the investment amount into asses n at time s and where the efficient frontier is spanned by those portfolio compositions which have optimal tradeoffs between maximizing return and minimizing risk and thus pose a two-objective optimization problem.

11. A hybrid quantum-classical computer system comprising
a quantum component, which is a quantum computing device, configured to realize a parametrized quantum circuit PQC by implementing a unitary quantum operation *U(y)* which is parametrized by freely choosable parameters y and which generates a N-qubit or qudit quantum state |*ψ_{γ}*〉 by applying the unitary operator to a previously defined N-qubit or qudit initial state |*ψ*₀〉, i.e. |*ψ_{γ}*〉 *= U*(*γ*)|*ψ*₀〉, which can be decomposed into the measurement basis of the quantum component, $\left|{ψ}_{γ}\right〉 = {\sum }_{c = 1}^{{d}_{H}} {ξ}_{γ , c} \left|{x}_{c}\right〉$ with *d_{H}* the dimensionality of the Hilbert space, and each measurement basis state |x*_{c}*〉 encodes one classical solution x*_{c}*,
and a classical computing component which is configured to run a classical optimization algorithm by providing new parameters values y to the quantum computing component, initiating the execution of the PQC and the preparation of the state |*ψ_{γ}*〉 and then receiving a set of classical solutions from the quantum module as a result and calculating the all cost functions for each solutions,
wherein the hybrid quantum-classical computer system is configured to perform a method according to any one of the claims 1 to 10.

## Patentansprüche

1. Computerimplementiertes Verfahren zum Erhalten eines Satzes PS von N_{PF} Pareto-optimalen Lösungen für ein gegebenes Mehrzieloptimierungsproblem mit M verschiedenen Zielen $\vec{C} \left(x\right) = {\left\{{C}_{α}\right\}}_{α = 1}^{M} = {\left({C}_{1}\left(x\right),{C}_{2}\left(x\right),…,{C}_{M}\left(x\right)\right)}^{T}$, wobei x eine klassische Lösung des Mehrzieloptimierungsproblems darstellt, umfassend ein Durchführen einer iterativen Prozedur, wobei jede Iteration t die folgenden Schritte umfasst:
a. Erzeugen, zur Iteration t, eines Satzes von Parametern γt auf einer klassischen Berechnungskomponente unter Verwendung eines klassischen Optimierungsalgorithmus und Senden desselben an eine Quantenkomponente,
b. auf der Quantenkomponente, die eine Quantenrechenvorrichtung ist, Erzeugen eines Quantenzustands |*ψ_{γₜ}*〉 = *U*(*γₜ*)|*ψ*₀〉 durch Ausführen einer parametrisierten Quantenschaltung (PQC), die eine unitäre Quantenoperation U(γ) mit dem Satz von Parametern γ = γt auf einem anfänglichen Quantenzustand |*ψ*₀〉 implementiert, wobei der Quantenzustand |*ψ_{γₜ}*〉 einen Satz von N_{S} verschiedenen Lösungen darstellt,
c. auf der Quantenkomponente, Auswählen eines Satzes von N_{S} ≥ N_{PF} Basiszuständen ${\left\{\left|{x}_{i}\right〉\right\}}_{i = 1}^{{N}_{S}}$ aus dem einen Quantenzustand |*ψ_{γₜ}*〉 und Senden der Informationen, deren Basiszustände ausgewählt wurden, an die klassische Berechnungskomponente,
wobei die Basiszustandsauswahl durch Abtasten aus dem Quantenzustand |*ψ_{γₜ}*〉 durchgeführt wird, das durch wiederholtes Messen des Quantenzustands realisiert wird, und Hinzufügen, für jeden gemessenen Zustand |x*ₘ*〉, der entsprechenden klassischen Lösung xₘ zum Satz ausgewählter Zustände, bis N_{S} verschiedene Zustände gemessen und zum Satz ausgewählter Zustände, ${S}_{t} = {\left\{{x}_{i}\right\}}_{i = 1}^{{N}_{S}}$, hinzugefügt wurden, oder wobei die Basiszustandsauswahl durch eine Vollzustandstomographie aus dem Quantenzustand |*ψ_{γₜ}*〉 durchgeführt wird, wobei der Satz von Gewichtungen jedes Basiszustands bestimmt wird, $T = {\left\{{\left|{ξ}_{i}\right|}^{2}\right\}}_{i = 1}^{{d}_{H}}$, wobei d_{H} die Dimensionalität des Hilbert-Raums ist und die Basiszustände, die der Teilmenge der N_{S} größten Gewichtungen entsprechen, ausgewählt werden, die den Satz ausgewählter Zustände, ${S}_{t} = {\left\{{x}_{i}\right\}}_{i = 1}^{{N}_{S}}$, bilden,
d. auf der klassischen Berechnungskomponente, Berechnen eines Satzes von Zielwerten, der aus den Zielwerten für jede Lösung im Satz klassischer Lösungen besteht,
e. Erzeugen einer neuen Schätzung für den Pareto-Satz PSₜ von Lösungen und die entsprechende Pareto-Front PFt durch die klassische Berechnungskomponente unter Verwendung des klassischen Optimierungsalgorithmus, der den Satz von Lösungen und den entsprechenden Satz von Zielwerten beinhaltet,
f. Aktualisieren des internen Zustands des klassischen Optimierungsalgorithmus basierend auf dem aktuellen Satz von Lösungen und dem Pareto-Satz PSt und ihren entsprechenden Sätzen von Zielwerten,
g. Prüfen eines Konvergenzkriteriums und, wenn das Konvergenzkriterium nicht erfüllt ist, Wiederholen des Prozesses ab Schritt a, bis das Konvergenzkriterium erfüllt ist,
Heranziehen der Ergebnisse für den Pareto-Satz PSₜ und die entsprechende Pareto-Front PFt nach Abschluss der letzten Iteration t als einen Satz PS von N_{PF} Pareto-optimalen Lösungen, für die der entsprechende Satz von Zielwertvektoren eine Annäherung an die wahre Pareto-Front PF ist.

2. Verfahren nach Anspruch 1,
wobei zusätzlich zum Aktualisieren des internen Zustands des klassischen Optimierungsalgorithmus ein Archiv basierend auf dem aktuellen Satz von Lösungen und dem Pareto-Satz PSt und ihren entsprechenden Sätzen von Zielwerten aktualisiert wird, und der Schritt des Erzeugens der neuen Schätzung ferner Werte aus vorherigen Iterationen, die aus einem Archiv abgerufen werden, einbezieht.

3. Verfahren nach Anspruch 1 oder 2,
wobei die parametrisierte Quantenschaltung PQC die unitäre Quantenoperation U(γ), die aus N_{L} Schichten mit unterschiedlichen wählbaren Sätzen von Parametern besteht, implementiert als $U \left(γ\right) = {\prod }_{l = 1}^{{N}_{L}} {U}_{l} \left({γ}_{l}\right)$
und wobei jede Schicht l mehrere Misch- und Phasenoperatoren mit getrennt wählbaren Parametersätzen γₗ = {γ_{X;l,}γ_{P;l}} umfasst und die Unitäre in jeder Schicht die Form aufweisen ${U}_{l} \left({γ}_{l}\right) = {\prod }_{α = 1}^{M} {e}^{- i {X}_{α} \left({γ}_{X ; l , α}\right)} {e}^{- i {γ}_{H ; l , α} {H}_{α}}$
wobei die Phasenunitäre in jeder Schicht, 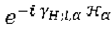 , frei wählbare Parameter ${γ}_{H ; l , α} ∈ ℝ$ aufweisen und durch Kosten-Hamilton-Operatoren H_{α} mit α = 1, ..., M erzeugt werden, wobei jeder Kosten-Hamilton-Operator H_{α} eine klassische Zielfunktion C_{α} darstellt, in dem Sinne, dass die Messbasiszustände |x〉 gleichzeitige Eigenzustände aller Problem-Hamilton-Operatoren sind und die Eigenwerte der Problem-Hamilton-Operatoren durch den Wert der entsprechenden klassischen Zielfunktion der entsprechenden klassischen Lösungen, x, gegeben sind,
und wobei die Mischunitäre in jeder Schicht, *e^{-i Xα}*(*γ^{X}*;*l,α*)*,* frei wählbare Parameter γ_{X;l,α} aufweisen und durch M parametrisierte Mischoperatoren X_{α}(γ_{X;l,α}) mit α = 1, ..., M erzeugt werden, wobei die Mischoperatoren nicht mit den Kosten-Hamilton-Operatoren kommutieren.

4. Verfahren nach Anspruch 1 oder 2,
wobei die parametrisierte Quantenschaltung PQC die unitäre Quantenoperation U(γ), die aus N_{L} Schichten mit unterschiedlichen wählbaren Sätzen von Parametern besteht, implementiert als $U \left(γ\right) = {\prod }_{l = 1}^{{N}_{L}} {U}_{l} \left({γ}_{l}\right)$
und wobei jede Schicht l mehrere Misch- und Phasenoperatoren mit getrennt wählbaren Parametersätzen γₗ ∈ {γ_{X;l,}γ_{P;l}} umfasst, wobei diese die Form aufweisen ${U}_{l} \left({γ}_{l}\right) = {\prod }_{k = 1}^{{N}_{P}} {e}^{- i {X}_{α} \left({γ}_{X ; l , k}\right)} {e}^{- i {γ}_{P ; l , k} {P}_{k}}$
wobei die Phasenunitäre in jeder Schicht, *e^{-i γP}*;*l,k P^{k}*, frei wählbare Parameter ${γ}_{P ; l , k} ∈ ℝ$ aufweisen und durch spezifische Summen über die Kosten-Hamilton-Operatoren H_{α} erzeugt werden,
${P}_{k} = {\sum }_{α = 1}^{M} {a}_{k , α} {H}_{α}$, wobei jeder Kosten-Hamilton-Operator H_{α} eine klassische Zielfunktion C_{α} darstellt, in dem Sinne, dass die Messbasiszustände |x〉 gleichzeitige Eigenzustände aller Kosten-Hamilton-Operatoren sind und die Eigenwerte der Problem-Hamilton-Operatoren den Wert der entsprechenden klassischen Zielfunktion der entsprechenden klassischen Lösungen, x, erhalten, wobei die Mischunitäre in jeder Schicht, *e^{-i Xk}*(*γ^{X}*;*l,k*), frei wählbare Parameter γ_{X;l,k} aufweisen und durch M parametrisierte Mischoperatoren Xₖ(γ_{X;l,k}) mit k=1, ..., N_{P} erzeugt werden, wobei die Mischoperatoren nicht mit den Kosten-Hamilton-Operatoren kommutieren, wobei die Koeffizienten in diesen Summen ${a}_{k , α} ∈ ℝ$ Referenzvektoren a̅ₖ darstellen, die ${\sum }_{α} {a}_{k , α}^{2} = {\vec{a}}_{k}^{T} ⋅ {\vec{a}}_{k} = 1$ und a_{k,n} ≥ 0 für jedes k erfüllen müssen und für jedes k eine bestimmte Richtung im Raum von Zielwerten definieren und somit eine Benutzerpräferenz widerspiegeln und am Anfang als Teil der Problemdefinition bestimmt werden, ${H}_{α} {C}_{α} \left|x\right〉 x {e}^{- i {X}_{k} \left({γ}_{X ; l , k}\right)} {γ}_{X ; l , k} {MX}_{α} \left({γ}_{X ; l , k}\right) = 1 , … , {N}_{P} .$

5. Verfahren nach Anspruch 1 oder 2,
wobei die parametrisierte Quantenschaltung PQC die unitäre Quantenoperation U(γ), die aus N_{L} Schichten mit unterschiedlichen wählbaren Sätzen von Parametern besteht, implementiert als $U \left(γ\right) = {\prod }_{l = 1}^{{N}_{L}} {U}_{l} \left({γ}_{l}\right)$
und wobei jede Schicht l mehrere Misch- und Phasenoperatoren mit getrennt wählbaren Parametersätzen γₗ ∈ {γ_{X;l}, γ_{V;l}} umfasst, wobei diese die Form aufweisen ${U}_{l} \left({γ}_{l}\right) = {e}^{- i {X}_{l} \left({γ}_{X ; l}\right)} {e}^{- i {γ}_{V ; l} V}$
wobei die Phasenunitäre in jeder Schicht, *e^{-i γV}*;*l V*, frei wählbare Parameter ${γ}_{V ; l} ∈ ℝ$ aufweisen und durch einen Operator V erzeugt werden, der das Hypervolumen im Zielraum schätzt, das durch eine Population von Zuständen aufgespannt wird, wie es durch eine Quantenüberlagerung von Zuständen codiert wird,
wobei die Funktion $HV \left({\left\{\vec{C}\left({x}_{i}\right)\right\}}_{i}^{{N}_{S}}\right)$ das Hypervolumen ergibt, das durch die Zielwertvektoren $\vec{C} \left({x}_{i}\right) = {\left\{{C}_{α}\left({x}_{i}\right)\right\}}_{α = 1}^{M}$ des Satzes von Lösungen ${\left\{{x}_{i}\right\}}_{i = 1}^{{N}_{S}}$ aufgespannt wird, und die Funktion $hs \left({\left\{{ξ}_{i}\right\}}_{i = 1}^{{N}_{S}}\right)$ Funktionswerte zwischen null und eins aufweist und ein Abwärtsskalieren des Hypervolumens eines bestimmten Satzes von Lösungen ermöglicht, falls die einzelnen Amplituden einiger der beitragenden Zustände kleiner als eine Schwelle sind oder eine Inhomogenität einer Verteilung der Amplituden eine Schwelle überschreitet,
und wobei jeder Kosten-Hamilton-Operator H_{α} eine klassische Zielfunktion C_{α} darstellt, in dem Sinne, dass die Messbasiszustände |x〉 gleichzeitige Eigenzustände aller Kosten-Hamilton-Operatoren sind und die Eigenwerte der Problem-Hamilton-Operatoren den Wert der entsprechenden klassischen Zielfunktion der entsprechenden klassischen Lösungen, x, erhalten,
und wobei die Mischunitäre in jeder Schicht, *e^{-i Xl}*(*γ^{X}*;*l*), mindestens einen frei wählbaren Parameter γ_{X;l} aufweisen und durch die parametrisierten Mischoperatoren Xₗ(γ_{X;l}) erzeugt werden, wobei die Mischoperatoren nicht mit den Kosten-Hamilton-Operatoren kommutieren.

6. Verfahren nach einem der Ansprüche 3 bis 5,
wobei jeder der Mischoperatoren in jeder Schicht durch eine Summe über alle x-Drehimpulsoperatoren oder generalisierten Pauli-X-Operatoren jedes physikalischen Qudits gegeben ist und wobei der Koeffizient jedes einzelnen Drehimpulsoperators in jeder Schicht durch einen frei wählbaren Parameter ${γ}_{X ; k / α , l , i} ∈ ℝ$ gegeben ist, wobei k/α die Mischoperatoren spezifiziert, l die Schichten bezeichnet und i alle physikalischen Qudits spezifiziert.

7. Verfahren nach einem der Ansprüche 3 bis 6,
wobei jeder der Mischoperatoren in jeder Schicht durch eine Summe über alle x-Drehimpulsoperatoren oder generalisierten Pauli-X-Operatoren jedes physikalischen Qudit gegeben ist und wobei es nur einen globalen Koeffizienten für die vollständige Summe über alle einzelnen Drehimpuls- oder generalisierten Pauli-X-Operatoren, die auf jeden physikalischen Qudit in jeder Schicht angewendet werden, gibt, der durch den frei wählbaren Parameter ${γ}_{X ; k / α , l} ∈ ℝ$ gegeben ist, wobei k/α die Mischoperatoren spezifiziert und l die Schichten bezeichnet.

8. Verfahren nach Anspruch 4,
wobei die Koeffizienten a_{k,α} der Referenzvektoren der Phasen-Hamilton-Operatoren, ${P}_{k} = {\sum }_{α = 1}^{M} {a}_{k , α} {H}_{α}$, in jedem Iterationsschritt t gemäß der Prozedur zur Referenzvektoranpassung nach dem Stand der Technik derart bestimmt und angepasst werden, dass in jeder Iteration ein anderer Satz von Referenzvektoren verwendet wird, wodurch eine Beschleunigung des Optimierungsprozesses und eine Diversifizierung der erhaltenen Pareto-Lösungen ermöglicht werden.

9. Verfahren nach einem der Ansprüche 1 bis 8,
wobei das Problem ein bidirektionales Mehrzielelektrofahrzeugladeproblem ist, wobei das Ziel darin besteht, einen Satz Pareto-optimaler Konfigurationen diskreter ganzzahliger Variablen zu finden, die einen vollständigen Lade- und Serviceplan für eine Flotte von Elektrofahrzeugen codieren, und wobei mehrere Ziele, die mindestens zwei aus Stromkosten für das Erfüllen aller Ladeanforderungen, Kundenzufriedenheit, Maximieren der Nutzung erneuerbarer Energien, Minimieren von Strom, der aus dem Netz entnommen wird, und Minimieren des Spitzenstromverbrauchs sind, für das Erreichen einer Annäherung der Pareto-Front, $ℙ F$, in Betracht gezogen werden.

10. Verfahren nach einem der Ansprüche 1 bis 8,
wobei das Verfahren angewendet wird, um die effiziente Grenze möglicher Portfoliozusammensetzungen zu erhalten, wie durch das Markowitz-Modell der modernen Portfoliotheorie unter Nebenbedingungen formuliert, indem die Zusammensetzungen eines Portfolios im Laufe der Zeit gefunden werden, wie durch ganzzahlige Variablen spezifiziert, die den Anlagebetrag für Vermögenswerte n zu einem Zeitpunkt s spezifizieren, und wobei die effiziente Grenze durch die Portfoliozusammensetzungen aufgespannt wird, die optimale Kompromisse zwischen einem Maximieren der Rendite und einem Minimieren des Risikos aufweisen und somit ein Optimierungsproblem mit zwei Zielen darstellen.

11. Hybrides Quanten-Klassik-Computersystem, umfassend
eine Quantenkomponente, die eine Quantenrechenvorrichtung ist, die dazu ausgelegt ist, eine parametrisierte Quantenschaltung PQC durch Implementieren einer unitären Quantenoperation U(γ) zu realisieren, die durch frei wählbare Parameter γ parametrisiert ist und die einen N-Qubit- oder -Qudit-Quantenzustand |*ψ_{γ}*〉 durch Anwenden des unitären Operators auf einen zuvor definierten N-Qubit oder -Qudit-Anfangszustand |*ψ*₀〉 erzeugt, d. h. |*ψ_{γ}*〉 = *U*(*γ*)|*ψ*₀〉, der in die Messbasis der Quantenkomponente, $\left|{ψ}_{γ}\right〉 = {\sum }_{c = 1}^{{d}_{H}} {ξ}_{γ , c} \left|{x}_{c}\right〉$, zerlegt werden kann, wobei d_{H} die Dimensionalität des Hilbert-Raums ist und wobei jeder Messbasiszustand |x*_{c}*〉 eine klassische Lösung x_{c} codiert,
und eine klassische Rechenkomponente, die dazu ausgelegt ist, einen klassischen Optimierungsalgorithmus durch Bereitstellen neuer Parameterwerte γ an die Quantenrechenkomponente, Initiieren der Ausführung der PQC und der Vorbereitung des Zustands |*ψ_{γ}*〉 und dann Empfangen eines Satzes klassischer Lösungen vom Quantenmodul als ein Ergebnis und Berechnen aller Kostenfunktionen für jede Lösung auszuführen,
wobei das hybride Quanten-Klassik-Computersystem dazu ausgelegt ist, ein Verfahren nach einem der Ansprüche 1 bis 10 durchzuführen.

## Revendications

1. Procédé mis en œuvre par ordinateur pour obtenir un ensemble PS de N_{PF} solutions de Pareto optimales à un problème d'optimisation multi-objectif donné ayant M objectifs différents $\vec{C} \left(x\right) = {\left\{{C}_{α}\right\}}_{α = 1}^{M} = {\left({C}_{1}\left(x\right),{C}_{2}\left(x\right), …,{C}_{M}\left(x\right)\right)}^{T}$ où x représente une solution classique du problème d'optimisation multi-objectif, comprenant la réalisation d'une procédure itérative dans laquelle chaque itération t comprend les étapes suivantes :
a. la génération, pour l'itération t, d'un ensemble de paramètres γₜ sur un composant de calcul classique en utilisant un algorithme d'optimisation classique et l'envoi de celui-ci à un composant quantique,
b. sur le composant quantique, qui est un dispositif informatique quantique, la génération d'un état quantique |*ψ_{γₜ}*〉 = *U*(*γₜ*)|*ψ*₀〉 par exécution d'un circuit quantique paramétré (PQC) mettant en œuvre une opération quantique unitaire U(γ) avec l'ensemble des paramètres γ = γₜ sur un état quantique initial |*ψ*₀〉, où l'état quantique |*ψ_{γₜ}*〉 représente un ensemble de N_{S} solutions différentes,
c. sur le composant quantique, la sélection d'un ensemble de N_{S} ≥ N_{PF} états de base ${\left\{\left|{x}_{i}\right〉\right\}}_{i = 1}^{{N}_{S}}$ à partir de l'état quantique |*ψ_{γₜ}*〉 et l'envoi des informations dont les états de base ont été sélectionnés au composant de calcul classique,
dans lequel la sélection de l'état de base est effectuée par échantillonnage à partir de l'état quantique |*ψ_{γₜ}*〉 qui est réalisé en mesurant de manière répétée l'état quantique, et en ajoutant pour chaque état mesuré |x*ₘ*〉 la solution classique xₘ correspondante à l'ensemble d'états sélectionnés jusqu'à ce que N_{S} états différents aient été mesurés et ajoutés à l'ensemble d'états sélectionnés, ${S}_{t} = {\left\{{x}_{i}\right\}}_{i = 1}^{{N}_{S}}$, ou dans lequel la sélection de l'état de base est effectuée par une tomographie à état complet à partir de l'état quantique |*ψ_{γₜ}*〉 où l'ensemble de poids de chaque état de base est déterminé, $T = {\left\{{\left|{ξ}_{i}\right|}^{2}\right\}}_{i = 1}^{{d}_{H}}$ d_{H} étant la dimensionnalité de l'espace de Hilbert, et les états de base correspondant au sous-ensemble des N_{S} poids les plus importants sont sélectionnés, qui forment l'ensemble des états sélectionnés, ${S}_{t} = {\left\{{x}_{i}\right\}}_{i = 1}^{{N}_{S}}$,
d. sur le composant de calcul classique, le calcul d'un ensemble de valeurs objectives composé des valeurs objectives pour chaque solution dans l'ensemble de solutions classiques,
e. la génération d'une nouvelle estimation pour l'ensemble de Pareto PSt de solutions et le front de Pareto PFt correspondant par le composant de calcul classique en utilisant l'algorithme d'optimisation classique intégrant l'ensemble de solutions et l'ensemble correspondant de valeurs objectives,
f. la mise à jour de l'état interne de l'algorithme d'optimisation classique sur la base de l'ensemble actuel de solutions et de l'ensemble de Pareto PSt et de leurs ensembles correspondants de valeurs objectives,
g. la vérification d'un critère de convergence et si le critère de convergence n'est pas satisfait, la répétition du processus à partir de l'étape a. jusqu'à ce que le critère de convergence soit rempli,
la prise des résultats de l'ensemble de Pareto PSt et du front de Pareto PFt correspondant après que la dernière itération t a été achevée en tant qu'ensemble PS de N_{PF} solutions de Pareto optimales, pour lequel l'ensemble correspondant de vecteurs de valeurs objectives est une approximation du vrai front de Pareto PF.

2. Procédé selon la revendication 1,
dans lequel, en plus de la mise à jour de l'état interne de l'algorithme d'optimisation classique, une archive est mise à jour sur la base de l'ensemble actuel de solutions et de l'ensemble de Pareto PSt et de leurs ensembles correspondants de valeurs objectives, et l'étape de génération la nouvelle estimation incorpore en outre des valeurs provenant d'itérations précédentes extraites d'une archive.

3. Procédé selon la revendication 1 ou 2,
dans lequel le circuit quantique paramétré PQC met en œuvre l'opération quantique unitaire U(γ) qui est composée de N_{L} couches avec différents ensembles de paramètres pouvant être sélectionnés $U \left(γ\right) = {\prod }_{l = 1}^{{N}_{L}} {U}_{l} \left({γ}_{l}\right)$
et où chaque couche l comprend plusieurs opérateurs de mélange et de phase avec des ensembles de paramètres pouvant être sélectionnés séparément γₗ = {γ_{X;l},γ_{P;l}}, et les unités dans chaque couche ont la forme ${U}_{l} \left({γ}_{l}\right) = {\prod }_{α = 1}^{M} {e}^{- i {X}_{α} \left({γ}_{X ; l , α}\right)} {e}^{- i {γ}_{H ; l , α} {H}_{α}}$
où les unités de phase dans chaque couche, 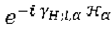 , ont des paramètres pouvant être sélectionnés librement ${γ}_{H ; l , α} ∈ ℝ$ et sont générées par des coûts hamiltoniens H_{α} avec α = 1, ..., M, où chaque coût hamiltonien H_{α} représente une fonction objective classique C_{α}, en ce sens que les états de base de mesure |x〉 sont des états propres simultanés de tous les problèmes hamiltoniens et que les valeurs propres des problèmes hamiltoniens sont données par la valeur de la fonction objective classique correspondante parmi les solutions classiques correspondantes, x,
et où les unités de mélange dans chaque couche, *e*^{-*i Xα*}(*γ^{X};l,α*), ont des paramètres pouvant être sélectionnés librement γ_{X;l,α} et sont générées par M opérateurs de mélange paramétrés X_{α}(γ_{X;l,α}) avec α = 1, ..., M, où les opérateurs de mélange ne commutent pas avec les coûts hamiltoniens.

4. Procédé selon la revendication 1 ou 2,
dans lequel le circuit quantique paramétré PQC met en œuvre l'opération quantique unitaire U(γ) qui est composée de N_{L} couches avec différents ensembles de paramètres pouvant être sélectionnés $U \left(γ\right) = {\prod }_{l = 1}^{{N}_{L}} {U}_{l} \left({γ}_{l}\right)$
et où chaque couche l comprend plusieurs opérateurs de mélange et de phase avec des ensembles de paramètres pouvant être sélectionnés séparément γₗ ∈ {γ_{X;l},γ_{P;l}}, et qui se présentent sous la forme ${U}_{l} \left({γ}_{l}\right) = {\prod }_{k = 1}^{{N}_{P}} {e}^{- i {X}_{k} \left({γ}_{X ; l , k}\right)} {e}^{- i {γ}_{P ; l , k} {P}_{k}}$
où les unités de phase dans chaque couche, *e^{-i γ^{P};l,k P^{k}}*, ont des paramètres pouvant être sélectionnés librement ${γ}_{P ; l , k} ∈ ℝ$ et sont générées par des sommes spécifiques sur les coûts hamiltoniens H_{α}
${P}_{k} = {\sum }_{α = 1}^{M} {a}_{k , α} {H}_{α}$, où chaque coût hamiltonien H_{α} représente une fonction objective classique C_{α}, en ce sens que les états de base de mesure |x〉 sont des états propres simultanés de tous les coûts hamiltoniens et que les valeurs propres des problèmes hamiltoniens reçoivent la valeur de la fonction objective classique correspondante des solutions classiques correspondantes, x,
où les unités de mélange dans chaque couche, *e^{-i Xk}*(*γ^{X};l,k*), ont des paramètres pouvant être sélectionnés librement γ_{X;l,k} et sont générées par M opérateurs de mélange paramétrés Xₖ(γ_{X;l,k}) avec k=1, ..., N_{P}, où les opérateurs de mélange ne commutent pas avec les coûts hamiltoniens, dans lequel les coefficients dans ces sommes ${a}_{k , α} ∈ ℝ$ représentent des vecteurs de référence a̅ₖ qui doivent remplir ${\sum }_{α} {a}_{k , α}^{2} = {\vec{a}}_{k}^{T} ⋅ {\vec{a}}_{k} = 1$ et a_{k,n} ≥ o pour chaque k, et pour chaque k, définir une certaine direction dans l'espace des valeurs objectives et refléter ainsi une préférence de l'utilisateur et sont déterminés au début dans le cadre de la définition du problème, ${H}_{α} {C}_{α} \left|x\right〉 x {e}^{- i {X}_{k} \left({γ}_{X ; l , k}\right)} {γ}_{X ; l , k} {MX}_{α} \left({γ}_{X ; l , k}\right) = 1 , … , {N}_{P} .$

5. Procédé selon la revendication 1 ou 2,
dans lequel le circuit quantique paramétré PQC met en œuvre l'opération quantique unitaire U(γ) qui est composée de N_{L} couches avec différents ensembles de paramètres pouvant être sélectionnés $U \left(γ\right) = {\prod }_{l = 1}^{{N}_{L}} {U}_{l} \left({γ}_{l}\right)$
et où chaque couche l comprend plusieurs opérateurs de mélange et de phase avec des ensembles de paramètres pouvant être sélectionnés séparément γₗ ∈ {γ_{X;l}, γ_{V;l}}, et qui ont la forme ${U}_{l} \left({γ}_{l}\right) = {e}^{- i {X}_{l} \left({γ}_{X ; l}\right)} {e}^{- i {γ}_{V ; l} V}$
où les unités de phase dans chaque couche, *e^{-i γ^{V};l V}*, ont des paramètres pouvant être sélectionnés librement ${γ}_{V ; l} ∈ ℝ$ et sont générées par un opérateur V qui estime l'hypervolume dans l'espace objectif qui est couvert par une population d'états tel qu'il est codé par une superposition quantique d'états
où la fonction $HV \left({\left\{\vec{C}\left({x}_{i}\right)\right\}}_{i}^{{N}_{S}}\right)$ donne l'hypervolume, qui est couvert par les vecteurs de valeurs objectives $\vec{C} \left({x}_{i}\right) = {\left\{{C}_{α}\left({x}_{i}\right)\right\}}_{α = 1}^{M}$ de l'ensemble de solutions ${\left\{{x}_{i}\right\}}_{i = 1}^{{N}_{S}}$ et la fonction $hs \left({\left\{{ξ}_{i}\right\}}_{o = 1}^{{N}_{S}}\right)$ a des valeurs de fonction comprises entre zéro et un et permet une réduction de l'hypervolume d'un ensemble particulier de solutions dans le cas où les amplitudes individuelles de certains des états contributeurs sont inférieures à un seuil ou une inhomogénéité d'une distribution des amplitudes dépasse un seuil,
et où chaque coût hamiltonien H_{α} représente une fonction objective classique C_{α}, en ce sens que les états de base de mesure |x〉 sont des états propres simultanés de tous les coûts hamiltoniens et que les valeurs propres des problèmes hamiltoniens reçoivent la valeur de la fonction objective classique correspondante des solutions classiques correspondantes, x,
et où les unités de mélange dans chaque couche, *e^{-i Xl}*(γ*^{X};l*), ont au moins un paramètre pouvant être sélectionné librement γ_{X;l} et sont générées par les opérateurs de mélange paramétrés Xₗ(γ_{X;l}), où les opérateurs de mélange ne commutent pas avec les coûts hamiltoniens.

6. Procédé selon l'une quelconque des revendications 3 à 5,
dans lequel chacun des opérateurs de mélange dans chaque couche est donné par une somme sur tous les opérateurs de moment angulaire x ou opérateurs X de Pauli généralisés de chaque qudit physique et où le coefficient de chaque opérateur de moment angulaire individuel dans chaque couche est donné par un paramètre pouvant être sélectionné librement ${γ}_{X ; k / α , l , i} ∈ ℝ$, où k/α énumère les opérateurs de mélange, l désigne les couches et i énumère tous les qudits physiques.

7. Procédé selon l'une quelconque des revendications 3 à 6,
dans lequel chacun des opérateurs de mélange dans chaque couche est donné par une somme sur tous les opérateurs de moment angulaire x ou opérateurs X de Pauli généralisés de chaque qudit physique et où il n'y a qu'un coefficient global pour la somme complète sur tous les moments angulaires individuels ou opérateurs X de Pauli généralisés appliqués à chaque qudit physique dans chaque couche qui est donné par le paramètre pouvant être sélectionné librement ${γ}_{X ; k / α , l} ∈ ℝ$ où k/α énumère les opérateurs de mélange, et l désigne les couches.

8. Procédé selon la revendication 4,
dans lequel les coefficients a_{k,α} des vecteurs de référence des phases hamiltoniennes, ${P}_{k} = {\sum }_{α = 1}^{M} {a}_{k , α} {H}_{α}$, sont déterminés et adaptés dans chaque étape d'itération t selon la procédure d'adaptation des vecteurs de référence de l'état de l'art tel que dans chaque itération, on utilise un ensemble différent de vecteurs de référence qui permet d'accélérer le processus d'optimisation et une diversification des solutions de Pareto obtenues.

9. Procédé selon l'une quelconque des revendications 1 à 8,
dans lequel le problème est un problème de recharge bidirectionnelle multi-objectif de véhicule électrique, où l'objectif est obtenu de trouver un ensemble de configurations optimales de Pareto de variables entières discrètes, qui codent un programme de facturation et de service complet pour une flotte de véhicules électriques et où plusieurs objectifs, qui sont au moins deux parmi un coût d'électricité pour satisfaire toutes les demandes de recharge, la satisfaction du client, la maximisation de l'utilisation des énergies renouvelables, la minimisation de l'électricité tirée du réseau et la minimisation de la consommation électrique de crête, sont considérés pour obtenir une approximation du front de Pareto $ℙ F$.

10. Procédé selon l'une quelconque des revendications 1 à 8,
dans lequel le procédé est appliqué pour obtenir la frontière efficace de compositions de portefeuille possibles telles que formulées par le modèle de Markowitz de la théorie moderne du portefeuille en trouvant les compositions d'un portefeuille dans le temps telles que spécifiées par des variables entières qui spécifient le montant de l'investissement en actifs n à des temps s et où la frontière efficace est couverte par ces compositions de portefeuille qui ont des compromis optimaux entre maximisation du rendement et minimisation du risque et posent ainsi un problème d'optimisation à deux objectifs.

11. Système informatique hybride quantique-classique comprenant
un composant quantique, qui est un dispositif informatique quantique, configuré pour réaliser un circuit quantique paramétré PQC par une mise en œuvre d'une opération quantique unitaire U(γ) paramétrée par des paramètres pouvant être sélectionnés librement γ et qui génère un état quantique |*ψ_{γ}*〉 de N-qubit ou qudit en appliquant l'opérateur unitaire à un état initial de N-qubit ou qudit préalablement défini |*ψ*₀〉, soit |*ψ_{γ}*〉 = *U*(*γ*)|*ψ*₀〉, qui peut être décomposée en base de mesure du composant quantique, $\left|{ψ}_{γ}\right〉 = {\sum }_{c = 1}^{{d}_{H}} {ξ}_{γ , c} \left|{x}_{c}\right〉$ avec d_{H} la dimensionnalité de l'espace de Hilbert, et chaque état de base de mesure |x*_{c}*〉 code une solution classique x_{c},
et un composant informatique classique qui est configuré pour exécuter un algorithme d'optimisation classique en fournissant de nouvelles valeurs de paramètres γ au composant informatique quantique, déclenchant l'exécution du PQC et la préparation de l'état |*ψ_{γ}*〉, puis recevant ensuite un ensemble de solutions classiques du module quantique en tant que résultat et calculant l'ensemble des fonctions de coût pour chaque solution,
dans lequel le système informatique hybride quantique-classique est configuré pour réaliser un procédé selon l'une quelconque des revendications 1 à 10.
